# EUROPEAN PATENT SPECIFICATION

(11) **EP 4 517 154 B1**
(45) Date of publication and mention of the grant of the patent: **22.07.2026**
(21) Application number: 24196781.9
(22) Date of filing: 27.08.2024
(51) Int. Cl.: F17C 5/00, F17C 7/04

(54) **APPARATUS AND PROCESS FOR CRYOGENIC LIQUID VAPORIZATION TO RECOOL GAS FOR CRYOGENIC FLUID RECOVERY**
VORRICHTUNG UND VERFAHREN ZUR VERDAMPFUNG VON KRYOGENER FLÜSSIGKEIT ZUR RÜCKKÜHLUNG VON GAS FÜR DIE RÜCKGEWINNUNG VON KRYOGENEN FLÜSSIGKEITEN
APPAREIL ET PROCÉDÉ POUR LA VAPORISATION DE LIQUIDES CRYOGÉNIQUES AFIN DE REFROIDIR LE GAZ POUR LA RÉCUPÉRATION DE FLUIDES CRYOGÉNIQUES

(30) Priority: 30.08.2023 US 202318239816
(43) Date of publication of application: 05.03.2025
(73) Proprietor: Air Products and Chemicals, Inc., Allentown, PA 18106-5500 (US)
(72) Inventor: Schmidt, Thomas S., Slatington, PA 18080 (US); Jonas, Gordon, Schwenksville, PA 19473 (US); Sane, Anup Vasant, Allentown, PA 18104 (US)
(74) Representative: SSM Sandmair

(56) References cited:
- EP-B1- 3 784 952
- WO-A1-2021/138169
- US-A- 5 590 535

## Description

### FIELD OF THE INVENTION

The present innovation relates to processes and systems for processing a cryogenic liquid and re-cool gas for recapture and recovery of cryogenic fluid. Embodiments can be configured to use a cryogenic liquid (e.g. liquid hydrogen) and utilize a gas (e.g. gaseous hydrogen) for warming the liquid and also cooling the gas to liquefy the gas, partially liquefy the gas, or cool the gas.

### BACKGROUND OF THE INVENTION

Examples of hydrogen generation and/or supply systems can be appreciated from U.S. Patent Nos. 6,401,767, 6,474,078, 6,619,336, 6,708,573, 6,745,801, 6,786,245, 7,028,724, 7,328,726, 7,793,675, 7,921,883, 8,020,589, 8,286,675, 8,365,777, 8,453,682, 8,899,278, 9,074,730, 9,151,448, 9,261,238, 9,279,541, 9,404,620, 9,863,583, 10,502,649, 10,508,770, and 11,167,732. Examples of hydrogen storage and/or dispensing systems can also be appreciated from U.S. Patent Application Publication Nos. 2023/0137335 and 2023/0107342 and International Publication No. WO 2023/095604. Such systems can provide hydrogen to vehicles for use as a fuel that powers operation of the vehicle. The document US5590535 A also discloses such a system.

There are also natural gas based storage and dispensing systems that can provide natural gas for fueling of vehicles that utilize natural gas as a fuel. U.S. Patent Application Publication No. 2014/0202585 discloses an example of such a system.

### SUMMARY

We determined that hydrogen storage and dispensing systems as well as other systems that utilize a cryogenic fluid for storage and dispensing the fluid as a fuel (e.g. natural gas based systems) or a process gas (e.g. liquid oxygen based systems that can heat oxygen to form an oxidant flow for combustion of a fuel, etc.) often lose significant amounts of fluid to atmosphere via venting. For example, storage tanks often vent gas that may be formed while a cryogenic liquid is stored in a tank to reduce pressure in the tank to avoid an over pressure condition. As another example, fluid is often lost during pump cooldown operations or storage tank feed conduit purge operations. As yet another example, cryogenic gas is often lost during tank and/or resupply trailer blowdown operations.

We have also recognized that this lost fluid can often contribute to the formation of fog as cold fluid is vented to atmosphere and subsequently contributes to the formation of fog in the atmosphere around the facility as a result of the venting of the cold gas. Further, we found that if stored cryogenic liquid is utilized for fuel dispensing operations, ambient air vaporizers that can be utilized in such processing may also contribute to formation of undesired fog as well. Further, we determined that such vaporizers can experience ice buildups that can reduce the operational life of the vaporizer or require the vaporizer to undergo defrost maintenance operations to remove that built up ice.

We determined that the fluid losses and fog formation are undesirable. For example, the fog formation can reduce visibility and pose a possible safety issue. As another example, the venting of the fluid can result in fluid losses that are undesirable by losing energy and other inputs associated with that lost fluid that is vented. Further, the venting of the fluid can be undesirable due to environmental concerns that may be associated with the fluid (e.g. in situations where the fluid is methane, the venting of that methane may be undesirable due to carbon based emission concerns.

Embodiments of our process, apparatus, and system can be provided that can help avoid losses of cryogenic fluid. Embodiments can provide improved operational flexibility that also reduced operational costs and avoids or limits waste of cryogenic fluid and the energy associated with formation, transport and/or storage of that fluid. Embodiments can also be provided to reduce the overall footprint, or size, of an apparatus and also mitigate formation of ice buildup on different structural elements of an apparatus that can help extend the operational range for cryogenic liquid vaporizers. Further, embodiments can be adapted to help avoid formation of fog or minimize the formation of fog as well as reduce or avoid emissions that may be environmentally hazardous (e.g. emission of methane, etc.).

In a first aspect, an apparatus for warming a cryogenic liquid to vaporize the cryogenic liquid and re-cool gas for recapture and recovery of that gas is provided. The apparatus can include a vaporized gas recapture and recovery system having a gas storage device positionable between a storage tank positioned and configured to store the cryogenic liquid and a vaporizer positioned to heat the cryogenic liquid outputtable from the storage tank to vaporize the cryogenic liquid. The gas storage device can be positioned to receive gas formed from the cryogenic liquid for storage and feed the stored gas to the vaporizer as a heating medium for warming of the cryogenic liquid.

In some embodiments, the cryogenic liquid can be liquid hydrogen. Other embodiments can utilize other types of stored cryogenic liquid (e.g. liquid oxygen, liquid natural gas, etc.).

In a second aspect, the apparatus can include an arrangement of feed conduits of the vaporized gas recapture and recovery system positioned to feed the gas formed from the cryogenic liquid to the gas storage device. An arrangement of output conduits of the vaporized gas recapture and recovery system can also be included. The output conduits can include a vaporizer heating medium feed conduit connected between the vaporizer and the gas storage device for feeding the gas to the vaporizer as the heating medium.

In some embodiments, the arrangement of feed conduits of the vaporized gas recapture and recovery system can include one or more of: (i) a pressure reduction conduit positioned between the gas storage device and the storage tank, (ii) a pump cooldown output conduit positioned between a pump and the gas storage device wherein the pump is positioned between the vaporizer and the storage tank to feed the cryogenic liquid to the vaporizer, and (iii) at least one trailer gas feed conduit positionable between a trailer and the gas storage device wherein the trailer is connectable to the storage tank via a trailer connection for feeding cryogenic liquid from the trailer to the storage tank.

At least one trailer gas feed conduit can be positioned and configured so the cryogenic gas formed when cryogenic liquid from the trailer is passed through the trailer connection to cool down elements of the trailer connection as a purge stream is feedable to the gas storage device and/or at least one trailer gas feed conduit can be positioned and configured so that cryogenic gas within the trailer is passable through the trailer gas feed conduit to at least one storage vessel of the gas storage device during a trailer blowdown operation.

Embodiments of the apparatus can include at least one trailer gas feed conduit, the pressure reduction conduit, and/or the pump cooldown output conduit. For instance, the apparatus can include the pressure reduction conduit and the pump cooldown output conduit in some embodiments.

In some embodiments, the arrangement of output conduits of the vaporized gas recapture and recovery system can include (i) a cooled heating medium output conduit connected to the vaporizer to output the gas usable as the heating medium in the vaporizer, and (ii) at least one of:

(A) a cryogenic gas recovery supply conduit connected between the cooled heating medium output conduit and a conduit or process unit downstream of the vaporizer, (B) a recovery pump feed conduit connected between the cooled heating medium output conduit and the pump, and/or (C) a storage tank recovery conduit connected between the cooled heating medium output conduit and the storage tank.

In a third aspect, the apparatus can include at least one cooling device connectable to a cooled heating medium output conduit to further cool the gas output from the vaporizer via the cooled heating medium output conduit wherein the at least one cooling device can be positioned between the storage tank and the vaporizer. The at least one cooling device can include a cooling heat exchanger connected to the cooled heating medium output conduit and a refrigerant feed conduit to receive refrigerant for cooling the gas output from the vaporizer received via the cooled heating medium output conduit. There can also be a refrigerant pressure increasing device positioned to received warmed refrigerant output from the cooling heat exchanger to increase the pressure of the warmed refrigerant for feeding to the vaporizer as a heating medium. A refrigerant pressure let down device can be positioned to receive the refrigerant from the vaporizer after the warm refrigerant fed to the vaporizer as the heating medium is cooled via the vaporizer. The pressure let down device can be connected to the refrigerant feed conduit and the pressure let down device can be configured to reduce a pressure of the refrigerant for feeding the refrigerant to the cooling heat exchanger at a pre-selected refrigerant feed pressure.

In a fourth aspect, the vaporizer can include a first heat exchanger and a second heat exchanger. The first heat exchanger can be connected to the vaporizer heating medium feed conduit and the second heat exchanger can be connected between a refrigerant pressure let down device and the refrigerant pressure increasing device. The second heat exchanger can be positioned to receive the warmed refrigerant and output the refrigerant to the refrigerant pressure let down device after the warmed refrigerant is used as a heating medium in the second heat exchanger.

In a fifth aspect, the refrigerant can be comprised of hydrogen or helium.

In a sixth aspect, the apparatus can include at least one expansion mechanism positioned between the vaporizer and the storage tank and/or the vaporizer and the pump.

In a seventh aspect, the gas storage device can include a metal hydride storage vessel configured to store the gas and also increase pressure of the gas to feed the gas to the vaporizer as the heating medium for warming of the cryogenic liquid.

In an eighth aspect, the cryogenic liquid is liquid hydrogen and the gas is hydrogen gas.

In a ninth aspect, the apparatus of the first aspect can include one or more features of the second aspect, third aspect, fourth aspect, fifth aspect, sixth aspect, seventh aspect and/or eighth aspect. It should therefore be appreciated that other embodiments can utilize one or more additional features. Examples of such features and combination of features include features shown in the exemplary embodiments illustrated in the drawings and/or discussed herein.

In a tenth aspect, a process for warming a cryogenic liquid and re-cooling gas is provided. The process can include feeding gas formed from cryogenic liquid stored in a storage tank, gas formed from cryogenic liquid within a cryogenic liquid trailer, purge gas from a trailer connection for connecting the trailer to the cryogenic liquid storage tank, and/or gas of pump cooldown fluid to a gas storage device. The process can also include outputting the gas from the gas storage device to a cryogenic liquid vaporizer as a heating medium for warming cryogenic liquid output from the cryogenic liquid storage tank and cooling the heating medium. The process can also include feeding the gas used as the heating medium in the cryogenic liquid vaporizer toward the cryogenic liquid storage tank and/or a pump positioned to feed the cryogenic liquid stored in the storage tank to the vaporizer for being vaporized and/or a conduit or other unit downstream of the cryogenic liquid vaporizer.

In some embodiments, the cryogenic liquid can be liquid hydrogen. In other embodiments, the cryogenic liquid can be another type of cryogenic liquid.

In an eleventh aspect, the feeding of the gas used as the heating medium in the cryogenic liquid vaporizer toward the cryogenic liquid storage tank and/or the pump can be performed and the feeding of the gas used as the heating medium in the cryogenic liquid vaporizer toward the cryogenic liquid storage tank can include: feeding at least a portion of the gas used as the heating medium in the cryogenic liquid vaporizer to (i) at least one cooling device and/or (ii) at least one pressure reduction device for feeding fluid to the storage tank and/or the pump.

In some embodiments, the fluid fed to the storage tank is at least partially liquified via the at least one cooling device and/or the at least one pressure reduction device.

In a twelfth aspect, the feeding of the gas used as the heating medium in the cryogenic liquid vaporizer toward the cryogenic liquid storage tank, and/or the pump, and/or the conduit or other unit downstream of the cryogenic liquid vaporizer can include feeding at least a portion of the gas used as the heating medium in the cryogenic liquid vaporizer to the conduit or other unit downstream of the cryogenic liquid vaporizer.

In a thirteenth aspect, the feeding of the gas used as the heating medium in the cryogenic liquid vaporizer toward the cryogenic liquid storage tank, and/or the pump, and/or the conduit or other unit downstream of the cryogenic liquid vaporizer can include feeding at least a portion of the gas used as the heating medium in the cryogenic liquid vaporizer to (i) at least one cooling device and/or (ii) at least one pressure reduction device for feeding fluid to the storage tank and/or the pump, the at least one pressure reduction device being positioned between the at least one cooling device and the cryogenic liquid storage tank and/or the pump.

In a fourteenth aspect, the feeding of the gas used as the heating medium in the cryogenic liquid vaporizer toward the cryogenic liquid storage tank, and/or the pump, and/or the conduit or other unit downstream of the cryogenic liquid vaporizer can include feeding at least a portion of the gas used as the heating medium in the cryogenic liquid vaporizer to at least one cooling device. The process can also include feeding a refrigerant to a cooling heat exchanger of the at least one cooling device to cool the gas used as the heating medium and outputting the refrigerant from the cooling heat exchanger for feeding to the vaporizer to cool the refrigerant output from the cooling heat exchanger.

In a fifteenth aspect, the gas storage device can include a metal hydride storage vessel configured to store the gas and increase pressure of the gas during the outputting of the gas from the gas storage device to the cryogenic liquid vaporizer as the heating medium.

In a sixteenth aspect, an embodiment of our apparatus can perform an embodiment of our process or be utilized in performance of an embodiment of our process.

In a seventeenth aspect, the process of the tenth aspect can include one or more features of the eleventh aspect, twelfth aspect, thirteenth aspect, fourteenth aspect, fifteenth aspect, and/or sixteenth aspect. It should therefore be appreciated that other embodiments of the process can utilize one or more additional features. Examples of such features and combination of features include features shown in the exemplary embodiments illustrated in the drawings and/or discussed herein.

It should be appreciated that embodiments of the process and apparatus can utilize various conduit arrangements and process control elements. The embodiments may utilize sensors (e.g., pressure sensors, temperature sensors, flow rate sensors, concentration sensors, etc.), controllers, valves, piping, and other process control elements. Some embodiments can utilize an automated process control system and/or a distributed control system (DCS), for example. Various different conduit arrangements and process control systems can be utilized to meet a particular set of design criteria. The DCS or automated process control system can utilize one or more computer devices that include a processor connected to a non-transitory computer readable medium and at least one transceiver that is configured to monitor, oversee and/or control processing in accordance with at least one pre-defined algorithm that can be defined in code stored in the computer readable medium that is executable by the processor.

Other details, objects, and advantages of our process for warming a cryogenic liquid and re-cooling gas for recapture and recovery of that gas formed from the cryogenic liquid, apparatuses for warming a cryogenic liquid and re-cooling gas, hydrogen storage and dispensing systems, hydrogen storage and dispensing processes, and methods of making and using the same will become apparent as the following description of certain exemplary embodiments thereof proceeds.

### BRIEF DESCRIPTION OF THE DRAWINGS

Exemplary embodiments of our process for warming a cryogenic liquid and re-cooling gas for recapture and recovery of that cryogenic gas formed from the cryogenic liquid, apparatuses for warming a cryogenic liquid and re-cooling gas, hydrogen storage and dispensing systems, hydrogen storage and dispensing processes, and methods of making and using the same are shown in the drawings included herewith. It should be understood that like reference characters used in the drawings may identify like components.

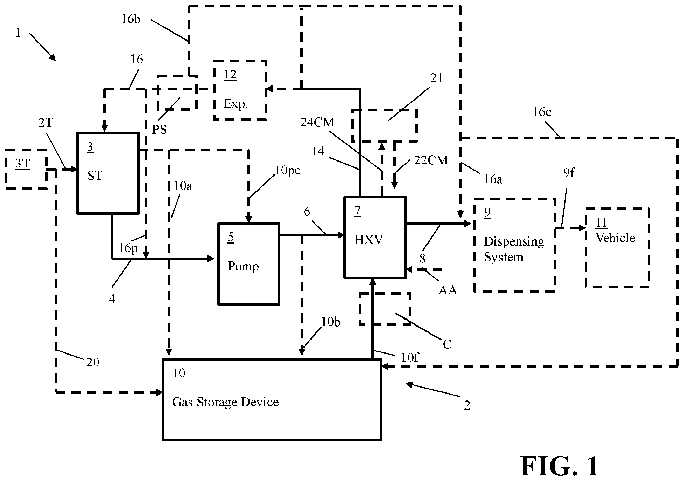

Figure 1 is a block diagram of a first exemplary embodiment of an apparatus 1 for warming a cryogenic liquid and re-cooling gas for recapture and recovery of cryogenic gas formed from the cryogenic liquid. Figure 1 also illustrates an exemplary embodiment of our process for warming a cryogenic liquid and re-cooling gas. Various optional elements that can be included in the exemplary embodiment illustrated in Figure 1 are shown in broken line.

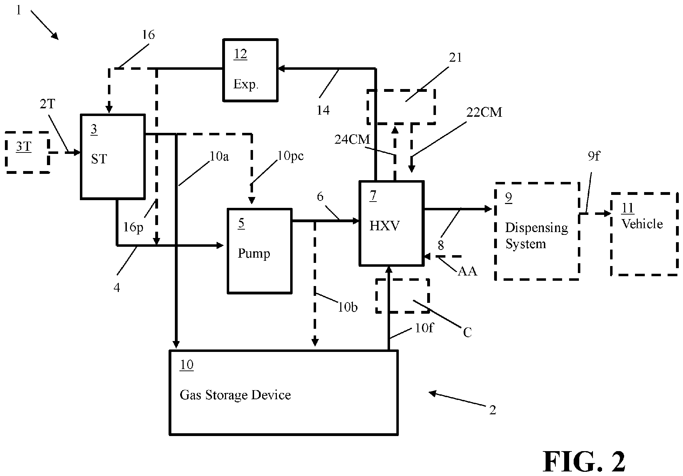

Figure 2 is a block diagram of an exemplary implementation of the first exemplary embodiment of an apparatus 1 shown in Figure 1. Figure 2 also illustrates an exemplary embodiment of our process for warming a cryogenic liquid and re-cooling gas. Various optional elements that can be included in the exemplary implementation illustrated in Figure 2 are shown in broken line.

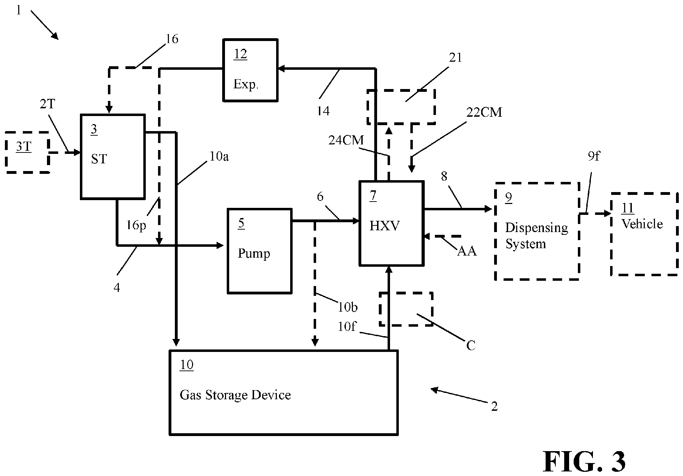

Figure 3 is a block diagram of another exemplary implementation of the first exemplary embodiment of an apparatus 1 shown in Figure 1. Figure 3 also illustrates an exemplary embodiment of our process for warming a cryogenic liquid and re-cooling gas. Various optional elements that can be included in the exemplary implementation illustrated in Figure 3 are shown in broken line.

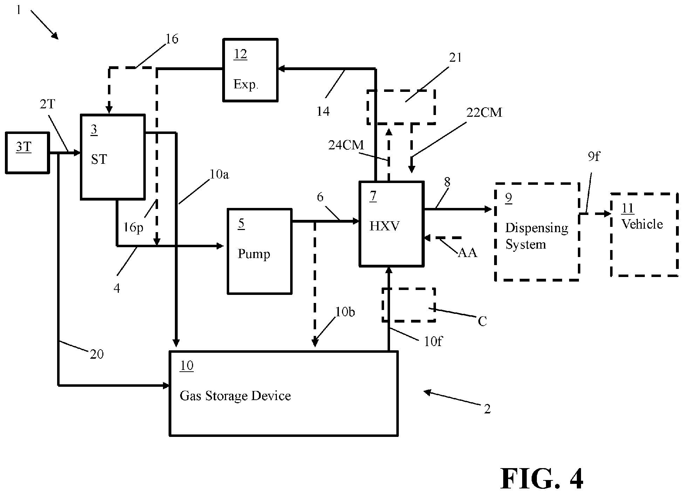

Figure 4 is a block diagram of a first exemplary implementation of the first exemplary embodiment of an apparatus 1 shown in Figure 1. Figure 4 also illustrates an exemplary embodiment of our process for warming a cryogenic liquid and re-cooling gas. Various optional elements that can be included in the exemplary implementation illustrated in Figure 4 are shown in broken line.

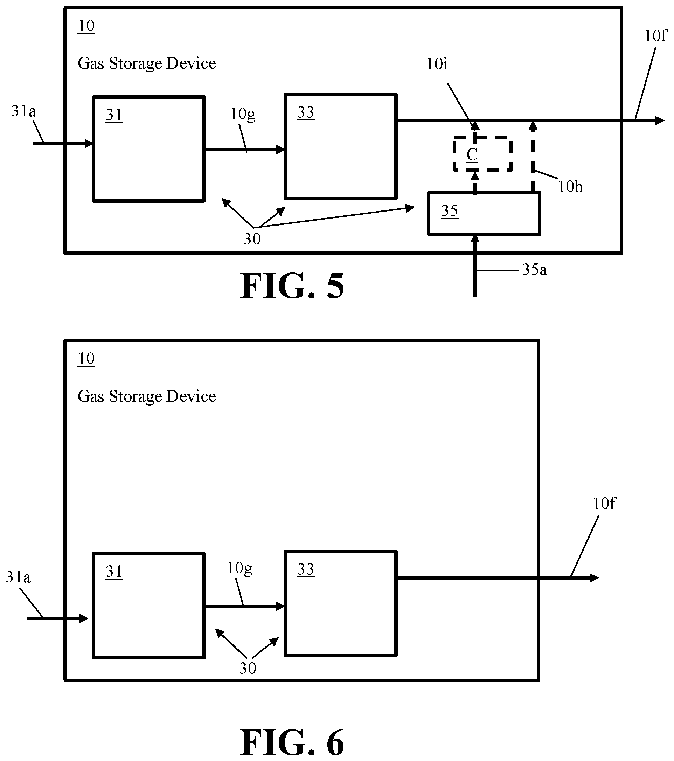

Figure 5 is a block diagram illustrating a first exemplary embodiment of a gas storage device 10 (Gas Storage Device) that can be utilized in the first exemplary embodiment of an apparatus 1 shown in Figure 1 and the additional exemplary implementations of that embodiment shown in Figures 2-4 and 12. Various optional elements that can be included in the exemplary embodiment illustrated in Figure 5 are shown in broken line.
Figure 6 is a block diagram illustrating a second exemplary embodiment of a gas storage device 10 (Gas Storage Device) that can be utilized in the first exemplary embodiment of an apparatus 1 shown in Figure 1 and the additional exemplary implementations of that embodiment shown in Figures 2-4 and 12.

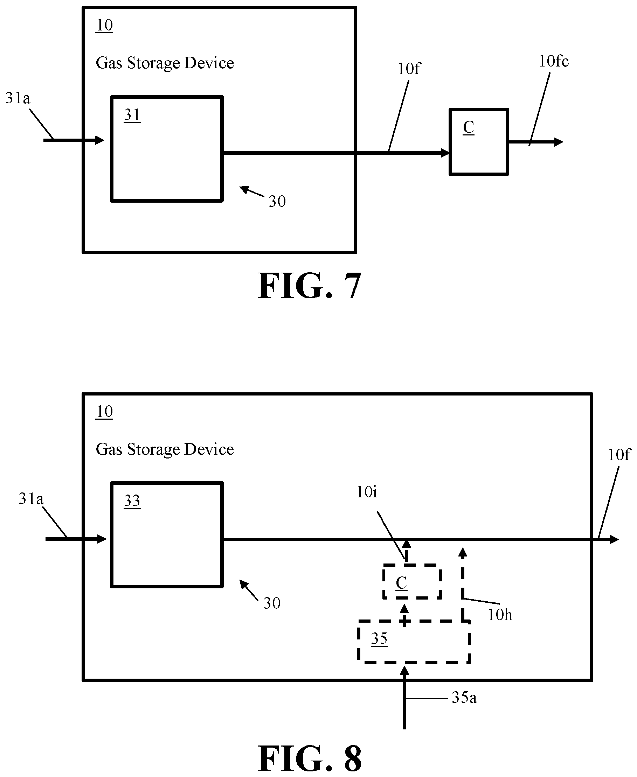

Figure 7 is a block diagram illustrating a third exemplary embodiment of a gas storage device 10 (Gas Storage Device) that can be utilized in the first exemplary embodiment of an apparatus 1 shown in Figure 1 and the additional exemplary implementations of that embodiment shown in Figures 2-4 and 12.
Figure 8 is a block diagram illustrating a fourth exemplary embodiment of a gas storage device 10 (Gas Storage Device) that can be utilized in the first exemplary embodiment of an apparatus 1 shown in Figure 1 and the additional exemplary implementations of that embodiment shown in Figures 2-4 and 12. Optional elements that can be included in the exemplary embodiment illustrated in Figure 8 are shown in broken line.

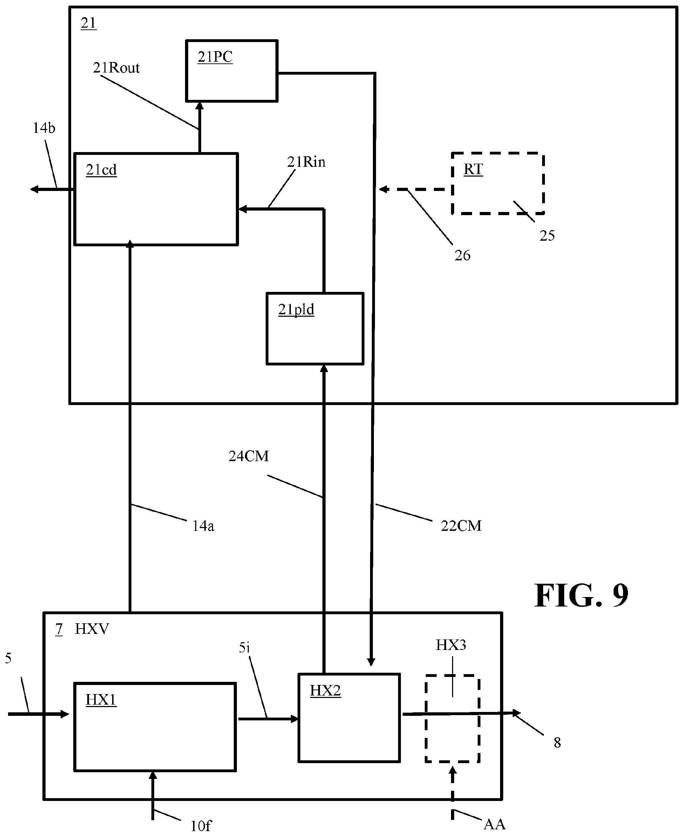

Figure 9 is a block diagram illustrating a first exemplary embodiment of an optional cooling device 21 that can be utilized in the first exemplary embodiment of an apparatus 1 shown in Figure 1 and the additional exemplary implementations of that embodiment shown in Figures 2-4. Optional elements that can be included in the exemplary embodiment illustrated in Figure 9 are shown in broken line.

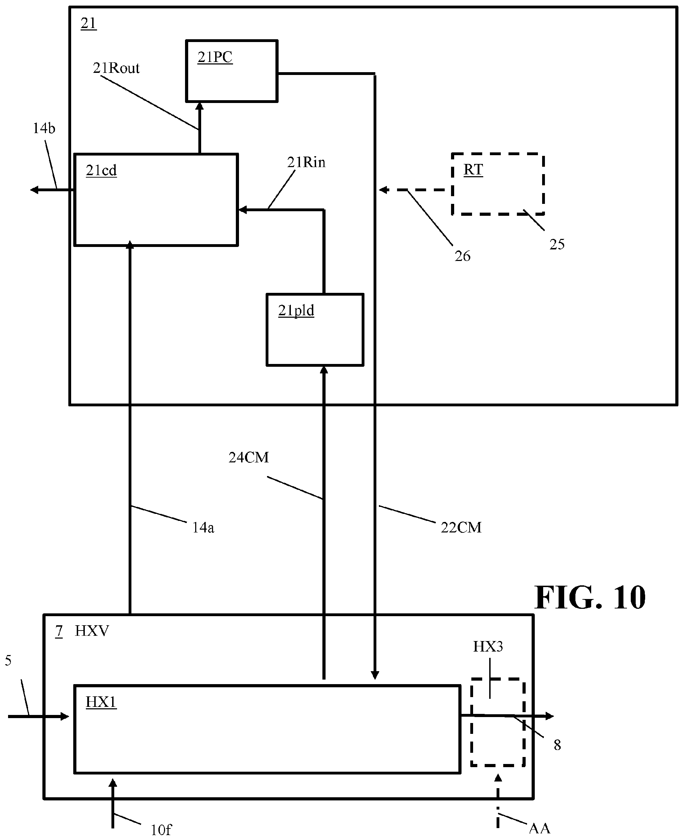

Figure 10 is a block diagram illustrating a second exemplary embodiment of an optional cooling device 21 that can be utilized in the first exemplary embodiment of an apparatus 1 shown in Figure 1 and the additional exemplary implementations of that embodiment shown in Figures 2-4. Optional elements that can be included in the exemplary embodiment illustrated in Figure 10 are shown in broken line.

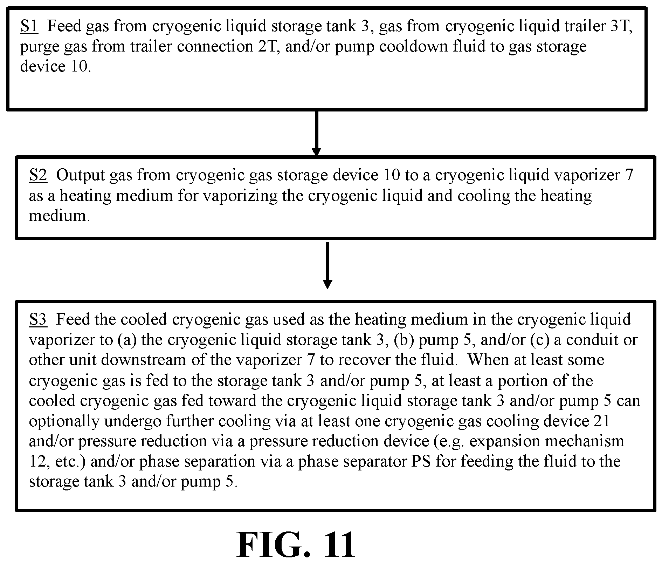

Figure 11 is a flow chart illustrating an exemplary embodiment of our process for warming a cryogenic liquid and re-cooling gas for recapture and recovery of that cryogenic gas. It should be appreciated that embodiments of this process can be utilized in embodiments of the apparatus 1 for warming a cryogenic liquid and re-cooling gas for recapture recovery of that cryogenic gas.

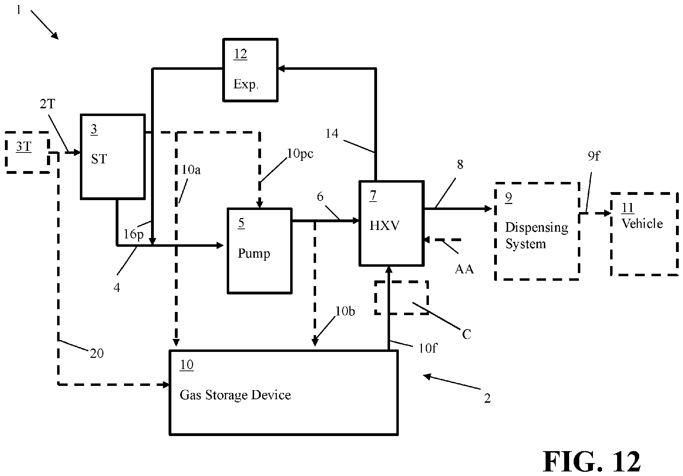

Figure 12 is a block diagram of an exemplary implementation of the first exemplary embodiment of an apparatus 1 shown in Figure 1. Figure 12 also illustrates an exemplary embodiment of our process for warming a cryogenic liquid and re-cooling gas. Various optional elements that can be included in the exemplary implementation illustrated in Figure 12 are shown in broken line.

### DETAILED DESCRIPTION

As may be appreciated from Figures 1-10 and 12 and the disclosure provided herein, exemplary embodiments of our apparatus 1 for warming a cryogenic liquid and re-cooling gas for recapture and recovery of cryogenic gas formed from cryogenic liquid can be positioned and arranged for improved processing performance that can help reduce cryogenic fluid losses to avoid losing such fluid to venting to atmosphere. Embodiments can provide improved operational efficiency by reducing fluid losses while also mitigating, if not avoiding, formation of fog associated with operation of the apparatus 1. Some embodiments of the apparatus 1 can be configured as a hydrogen storage and dispensing system and/or utilize a process for hydrogen storage and dispensing. Other embodiments of the apparatus 1 can be configured as other types of systems that can utilize other types of cryogenic fluid (e.g. methane, or natural gas, cryogenic oxygen that may be stored as a liquid for subsequent use as a gas, etc.).

Referring to Figures 1-4, the apparatus 1 can include a cryogenic fluid storage tank 3 (ST) that can be configured to store liquid cryogenic fluid as well as gaseous cryogenic fluid that may form as a result of the storage of the liquid cryogenic fluid in the tank evaporating into a gas while the liquid is stored in the liquid cryogenic fluid storage tank 3. The cryogenic gas within the tank 3 may be in an upper portion of the tank above a liquid level within the tank. The cryogenic fluid stored in the tank can be hydrogen or another suitable cryogenic fluid (e.g. methane, oxygen, etc.).

The storage tank 3 can be filled or refilled via at least one trailer 3T that can be connectable to the storage tank 3 via a trailer connection 2T. A cryogenic liquid within the trailer 3T can be fed to the tank to refill the tank, add additional cryogenic liquid to the tank 3, or otherwise provide additional cryogenic fluid to the tank 3 via the trailer connection 2T that is connectable between the trailer 3T and the storage tank 3. In other embodiments, resupply of the cryogenic fluid to the storage tank 3 can be provided via another source of the fluid (e.g. a hydrogen formation device, etc.) that may be on the site of the apparatus.

The storage tank 3 can be configured for the storage of a cryogenic fluid. In embodiments in which the cryogenic liquid to be stored is hydrogen, the temperature at which the fluid is stored in the storage tank can be in a pre-selected storage temperature range of -225°C to -280°C and the storage pressure can be in a pre-selected storage pressure range of 0.1 MPa to 3 MPa. In embodiments in which the cryogenic liquid to be stored is oxygen, the pre-selected storage temperature can be in a range of -219°C and - 125°C and the storage pressure can be in a pre-selected storage pressure range of 0.1 MPa to 3 MPa. Other cryogenic liquids can also be stored in the storage tank (e.g. liquid natural gas, liquid nitrogen, etc.). Typically, the pre-selected storage temperature and pre-selected storage pressure can be selected so the stored fluid is below the fluid's critical temperature to help minimize boil-off of the liquid.

The storage tank 3 can be fluidly connected to a pump 5 via a pump feed conduit 4 positioned between the storage tank 3 and the pump 5. The pump 5 can be configured to drive a flow of liquid or help drive a flow of fluid that includes a mixture of liquid and gas. The pump 5 can be positioned to increase the pressure of the fluid for feeding the fluid to a vaporizer 7 (HXV) so that cryogenic liquid fed to the pump 5 can be vaporized into a gas. The fluid output from the pump 5 can have a pre-selected vaporizer feed pressure, which can be a pressure within the range of 20 MPa to 80 MPa, 20 MPa to 40 MPa, 30 MPa to 70 MPa, or other suitable pressure range, for example.

A vaporizer feed conduit 6 can be positioned between the pump 5 and the vaporizer 7 to feed the cryogenic fluid from the pump 5 to the vaporizer 7. In some embodiments, the vaporizer 7 can be positioned to heat the cryogenic fluid and output the cryogenic fluid as a cryogenic gas for feeding to a dispensing system 9. A vaporizer output conduit 8 can be positioned between the vaporizer 7 and the dispensing system 9 for feeding the warmed gas output from the vaporizer 7 to the dispensing system 9.

The vaporizer 7 can include at least one heat exchanger (e.g. a plurality of heat exchangers or a single heat exchanger). The vaporizer 7 can be configured to utilize at least one heating medium. The heating medium fed to the vaporizer 7 can include gas formed via vaporization of the cryogenic liquid stored in the storage tank 3 when the liquid is warmed (e.g. during storage in the storage tank 3, via use in purge operations, residual gas of cryogenic liquid retained in a trailer 3T that may have been formed or fed to trailer during transit, gas formed during a pump cooldown operation, etc.). In some embodiments, the vaporizer 7 can include more than one heat exchanger and the heating medium provided via the gas formed by the vaporized cryogenic liquid may not be sufficient for vaporizing the cryogenic liquid into a gas for outputting as a gas via the vaporizer output conduit 8. In such an embodiment, at least one additional heating medium can be utilized for vaporization of the cryogenic liquid in the vaporizer 7 for providing the warmed gas for feeding to the vaporizer output conduit 8. Such a heating medium can include, for example, ambient air. As another example, such an additional heating medium can also include or alternatively include a warmed refrigerant flow as discussed herein.

In some embodiments, the dispensing system 9 can include at least one dispenser for dispensing the gas to at least one vehicle 11 via at least one vehicle connection device 9f that can be positionable to fluidly connect the dispensing system 9 to the vehicle 11 for feeding the fluid to at least one fuel tank of the vehicle 11. The dispensing system 9 can also include a flow control manifold connected to one or more of the dispensers for distributing the cryogenic fluid to the dispenser to facilitate the fueling of a vehicle 11.

In other embodiments, it is contemplated that the apparatus may provide the cryogenic fluid to another plant process. In such embodiments, the vaporizer output conduit 8 can be positioned between the vaporizer 7 and another plant process element for feeding the warmed cryogenic fluid to the plant process element. For example, in embodiments in which the cryogenic fluid is oxygen and the apparatus 1 is configured to support furnace operations for combustion of a fuel or melting of metal (e.g. aluminum or steel), the vaporizer output conduit 8 can be positioned to provide a flow of oxidant to a furnace for combustion of a fuel in the furnace.

The apparatus 1 can also include a vaporized gas recapture and recovery system 2 that is configured to recapture cryogenic liquid that is vaporized into a gas during storage, use as a purge stream, use in pump cooldown operations, and/or in other uses to avoid having to vent that gas formed from the cryogenic liquid. For example, the vaporized gas recapture and recovery system 2 can be configured to recapture and recover gas in one or more of the following situations: (i) gas formed as the cryogenic liquid may warm during storage, (ii) gas formed when cryogenic liquid is used in a pump cooldown operation and/or a purge of a feed line, (iii) gas formed from the cryogenic liquid used for purging of a line and/or (iv) gas formed during a blowdown operation and/or gas output from a tank or trailer during a blowdown operation. The vaporized gas recapture and recovery system 2 can also be configured to collect other gas formed from the cryogenic liquid (e.g. due to evaporation, boil-off, warming during storage or use, etc.).

The vaporized gas recapture and recovery system 2 can include a gas storage device 10. The gas storage device 10 can include one or more gas storage vessels 30. The gas storage vessels 30 can be configured to store the gas formed from the cryogenic liquid when the gas is warmed and no longer at a cryogenic temperature. The warming of the gas fed to the gas storage device 10 can be provided via at least one warming tank, conduit paths for feeding the formed gas to the gas storage device, use of an enlarged conduit segment within the gas feed conduit for feeding gas to the gas storage device to facilitate warming of the gas to a non-cryogenic temperature, or other mechanisms or configurations to facilitate warming of the gas to a non-cryogenic temperature for storage in one or more storage vessels 30 of the gas storage device 10. In some embodiments, the non-cryogenic temperature for storage of the gas can be a temperature that is greater than -100°C, between -100°C and 50°C, between -100°C and 25°C, or other suitable storage temperature within a pre-selected gas storage temperature range.

The gas storage device 10 can include at least one gas storage vessel 30 and can also include a pressure increasing mechanism C. The pressure increasing mechanism C can be incorporated into a storage vessel 30, incorporated into the gas storage device 10, or can be positioned between the gas storage device 10 and the vaporizer 7 for increasing pressure of a gas feed 10f to be fed to the vaporizer 7 to function as a heating medium therein for warming the cryogenic liquid output from the storage tank 3 that can be fed to the vaporizer 7 via the pump 5 and vaporizer feed conduit 6. The gas feed 10f can be fed to the vaporizer 7 via a vaporizer heating medium feed conduit positioned between the gas storage device 10 and the vaporizer 7. In embodiments where the pressure increasing mechanism C is not incorporated into the gas storage device 10, the pressure increasing mechanism C can be connected to the vaporizer heating medium feed conduit or be integrated into that conduit for increasing the pressure of the gas feed 10f to a pre-selected heating medium pressure that is within a pre-selected vaporizer heating medium pressure range.

For instance, in some configurations, the pressure increasing mechanism C can include a compressor, a pump, a bump tank, or other device that is configured to increase the pressure of the gas for feeding to the vaporizer 7 as a heating medium at a pre-selected heating medium pressure that is within a pre-selected vaporizer heating medium pressure range. This pressure range can be in the range of 0.1 MPA to 3 MPa, between .5 MPa and 1 MPa, between .3 MPa and 1.5 MPa, or other suitable range. The pressure increasing mechanism C (when utilized) can be positioned between the gas storage device 10 and the vaporizer 7 to output the gas at the pre-selected vaporizer heating medium pressure via a vaporizer heating medium feed conduit 10fc positioned between the vaporizer 7 and the gas storage device 10 and/or positioned between the pressure increasing mechanism C and the vaporizer 7.

In other configurations, the increasing pressure mechanism can be at least one heating element for heating a storage vessel 30 that is configured as a metal hydride storage vessel 33 that can heat the vessel so that hydrogen stored in the vessel can be released from the vessel 30 at an increased pressure that is within the pre-selected vaporizer heating medium pressure range for feeding to the vaporizer via the vaporizer heating medium feed conduit positioned between the vaporizer 7 and the gas storage device 10.

The vaporized gas recapture and recovery system 2 can also include an arrangement of feed conduits for recovering cryogenic gas or other gas formed from the cryogenic liquid vaporizing (e.g. evaporating, boiling off, etc.) from different units of the apparatus 1 and conveying it to the gas storage device 10 and an arrangement of output conduits so gas stored in the gas storage device 10 can be fed to the vaporizer 7 and subsequently routed to the storage tank 3 and/or conduit downstream of the vaporizer 7 (e.g. vaporizer output conduit 8, etc.).

The vaporized gas recapture and recovery system 2 can also include at least one expansion mechanism 12 (Exp.) and/or at least one cooling device 21 positioned for cooling and/or facilitating at least partial liquefaction of the cooled gas used as the heating medium in the vaporizer 7 after it is output from the vaporizer 7 as a cooled heating medium stream via cooled heating medium output conduit 14 that can be connected to the vaporizer 7. When utilized, these components can be connected to the arrangement of output conduits of the vaporized gas recapture and recovery system 2.

For example, the cooled heating medium output conduit 14 can be a component of the arrangement of output conduits of the vaporized gas recapture and recovery system 2. As may be appreciated from the below, the cooled heating medium output conduit 14 can include a cooling device feed conduit 14a and an expansion mechanism feed conduit 14b in embodiments that utilize a cooling device 21.

Also, the vaporizer heating medium feed conduit for the gas feed 10f to be fed to the vaporizer 7 can be a component of the arrangement of output conduits of the vaporized gas recapture and recovery system 2. The arrangement of output conduits of the vaporized gas recapture and recovery system 2 can also include other conduits. For example, the arrangement of output conduits of the vaporized gas recapture and recovery system 2 can include a storage tank recovery conduit 16, a recovery pump feed conduit 16p, and/or a cryogenic gas recovery supply conduit 16a as discussed below.

Examples of the arrangement of feed conduits of the vaporized gas recapture and recovery system 2 may best be appreciated from Figures 1-8. For example, the arrangement of feed conduits can include at least one trailer gas feed conduit 20 that is positioned between the gas storage device 10 and the trailer connection 2T and/or trailer 3T for feeding cryogenic gas toward at least one storage vessel 30 of the gas storage device 10 for storage of the gas formed from the cryogenic liquid to the gas storage device 10. For example, the trailer gas feed conduit 20 can be positioned so the cryogenic gas formed when cryogenic liquid from a trailer 3T is passed through the trailer connection 2T to cool down the elements of the connection as a purge stream can be captured and fed to the gas storage device 10 for storage and use instead of being vented. The purge stream that is captured for feeding to the gas storage device 10 can undergo purification via at least one purification unit (e.g. adsorber having adsorbent material therein for removing impurities from the captured purge stream, etc.) prior to being fed to the storage device 10 in some embodiments. Such a purification unit can be incorporated into the trailer gas feed conduit 20 and/or included in that conduit, for example.

The trailer gas feed conduit 20 can also, or alternatively, be positioned so that cryogenic gas within the trailer 3T (e.g. gas that may have been formed while the cryogenic liquid within the trailer was being stored in the trailer 3T) can be passed through the trailer gas feed conduit to at least one storage vessel 30 for storage of the gas during a trailer blowdown operation. This type of blowdown operation can occur prior to the trailer 3T being moved off site to help ensure the pressure within the trailer 3T is below a preselected threshold or can be provided prior to the feeding of the cryogenic liquid to the storage tank 3 to avoid an over pressure condition within the trailer 3T.

The arrangement of feed conduits of the vaporized gas recapture and recovery system 2 can also (or alternatively) include a pressure reduction conduit 10a that is connectable between the storage tank 3 and the gas storage device 10 (e.g. at least one storage vessel 30 of the gas storage device 10) so that cryogenic gas formed in the tank 3 while the cryogenic liquid is stored therein can be removed from the tank 3 and fed to at least one storage vessel 30 of the gas storage device 10 instead of being vented to atmosphere. This type of removal of cryogenic gas from the tank 3 can occur periodically to reduce the pressure in the tank 3 to maintain the pressure within the tank at or below a pre-selected tank storage pressure. As the cryogenic liquid is stored in the tank over time, cryogenic gas can be formed during the storage time (e.g. as boil-off or evaporation during storage), which can increase the pressure in the tank. The periodic removal of the formed cryogenic gas can reduce the pressure within the tank 3 and keep that pressure at or below the pre-selected tank storage pressure. This type of pressure reduction can occur periodically in response to a detection of the pressure within the tank being at or above a pre-selected threshold, which can be the pre-selected tank storage pressure. The detection can be provided via a regulator or a pressure sensor positioned to monitor or measure the pressure of the tank 3. A controller can be configured to actuate a valve to open a valve of the tank so that cryogenic gas can be output from the tank to be fed to at least one vessel 30 of the gas storage device 10 for storage of the gas via pressure reduction conduit 10a, which can be connected between the storage tank 3 and the gas storage device 10. And, as noted above, the gas stored via the gas storage device 10 can be at a non-cryogenic temperature due to warming of the gas that can occur during the passing of the gas toward at least one storage vessel 30 of the gas storage device 10.

This removal of cryogenic gas from the tank 3 and conveying of the gas to the gas storage device 10 can permit the gas to be re-cooled and recaptured instead of being vented to atmosphere to alleviate an over pressure condition within the tank 3. This pressure reduction conduit 10a can also be utilized during a blowdown operation to reduce the pressure within the tank 3 to remove cryogenic gas within the tank 3 to facilitate further filling of the tank 3 with cryogenic liquid to be output from a trailer 3T to be fed to the tank 3 via the trailer connection 2T. The tank blowdown operation utilizing the pressure reduction conduit 10a can occur at the same time the above mentioned trailer blowdown operation is performed such that cryogenic gas from the trailer 3T is provided to the gas storage device 10 via trailer gas feed conduit 20 and cryogenic gas from the tank 3 is provided to the gas storage device 10 via pressure reduction conduit 10a. This type of blowdown operation can occur before, during or after the above mentioned trailer connection 2T purge operation is performed.

The arrangement of feed conduits of the vaporized gas recapture and recovery system 2 can also (or alternatively) include one or more pump cooldown conduits for recovery of cryogenic fluid that can be fed to the pump 5 to cool the pump down prior to the pump being actuated to drive a flow of the cryogenic liquid from the tank 3 to the vaporizer 7. For example, a pump cooldown feed conduit 10pc and/or the pump feed conduit 4 can be utilized to feed cryogenic fluid to the pump to cool the pump down prior to actuation of the pump 5. In some embodiments, cryogenic liquid can be fed to the pump via the pump feed conduit for cooling down the pump 5. As a result of such cooling down, the cryogenic liquid can vaporize as it cools the pump 5 and the cryogenic gas formed via the pump cooldown can be output from the pump and fed to at least one vessel 30 of the gas storage device 10 via a pump cooldown output conduit 10b positioned between the pump 5 and the gas storage device 10.

In other embodiments, a pump cooldown feed conduit 10pc can be connected between the pump 5 and the storage tank 3 to feed cryogenic fluid from the tank 3 to the pump 5 for cooling down the pump 5. The cryogenic fluid can subsequently be output from the pump 5 as cryogenic gas that is output from the pump 5 for being fed to at least one storage vessel 30 of the gas storage device 10 via the pump cooldown output conduit 10b positioned between the pump 5 and the gas storage device 10. The cryogenic fluid output from the tank 3 for being passed through the pump cooldown feed conduit 10pc can be cryogenic gas that is within the tank 3 in some embodiments. In such a configuration, the inlet for the pump cooldown feed conduit 10pc can be positioned above an anticipated liquid level of the tank 3 so that cryogenic gas is output from the tank 3 for passing to the pump cooldown feed conduit 10pc for the pump cooldown operation and subsequent storage of that cryogenic gas.

In some embodiments that may also include the pressure reduction conduit 10a, the pump cooldown feed conduit 10pc can be connected between the pump 5 and the pressure reduction conduit 10a for providing the cryogenic gas from the tank 3 to the pump 5 for performance of the pump cooldown operation and subsequent feeding of the cryogenic gas to the gas storage device 10.

As noted above, the vaporized gas recapture and recovery system 2 can also include at least one expansion mechanism 12 (Exp.) and/or at least one cooling device 21 positioned for cooling and/or facilitating at least partial liquefaction of the cooled cryogenic gas used as the heating medium in the vaporizer 7 after it is output from the vaporizer 7 as a cooled heating medium stream via cooled heating medium output conduit 14 that can be connected to the vaporizer 7. For example, the cooled gas used as the heating medium in the vaporizer 7 output from at least one storage vessel 30 of the gas storage device 10 can be output from the vaporizer 7 via cooled heating medium output conduit 14 and subsequently fed to an expansion mechanism 12 (Exp.) to reduce the pressure of this fluid to a pre-selected storage tank feed pressure. Such a pre-selected storage tank feed pressure can be a pressure of between 0.1 MPa and 3 MPa in some embodiments. The expansion mechanism 12 can include a control valve, a Joule-Thomson valve, an expander, a combination of such units, or other suitable pressure reduction device.

The pressure reduction provided by the expansion mechanism 12 can also function to cool the fluid. The pressure reduction and cooling that may be provided via the expansion mechanism 12 may partially liquefy or fully liquefy the gas while its pressure is reduced. Alternatively, the pressure reduction and cooling that may be provided via the expansion mechanism 12 can further cool the gas without even partially liquefying the gas to help maintain pressure within the storage tank 3 and help limit cryogenic liquid boil-off that may occur while the cryogenic liquid is stored in the tank 3. The fluid output from the expansion mechanism 12 can be fed to the storage tank 3 via a storage tank recovery conduit 16 positioned between the storage tank 3 and the expansion mechanism 12 and/or can be fed to the pump 5 via a recovery pump feed conduit 16p positioned between the expansion mechanism 12 and the pump 5 (e.g. being fed to the pump feed conduit 4 via the recovery pump feed conduit 16p being connected between the pump feed conduit 4 and the expansion mechanism 12 for feeding the fluid from the expansion mechanism 12 to the pump 5 for passing through the pump with cryogenic liquid from the storage tank 3, etc.). In situations where all or at least a portion of fluid output from the expansion mechanism 12 is fed to the pump 5, the fluid can be fed to the pump 5 for being fed toward the vaporizer 7 for vaporization and/or warming therein for being output as warmed gas via the vaporizer output conduit 8.

Figure 12 illustrates an exemplary implementation of the embodiment shown in Figure 1 that can provide a flow of fluid from the expansion mechanism 12 to the pump 5, for example. The fluid fed to the pump 5 via the recovery pump feed conduit 16p can be cooled gas, cryogenic liquid, or a mix of liquid and gas.

In situations where at least some of the fluid to be recovered included gas that is fed to the storage tank 3 via storage tank recovery conduit 16, the gas can be fed to the storage tank 3 so that the gas is fed below a liquid level line of the storage tank 3 so the gas is passed through the cryogenic liquid of the storage tank 3 (e.g. the gas can be bubbled through the liquid of the storage tank 3). This bubbling of the recovered gas can help cool that gas fed to the storage tank 3 via the storage tank recovery conduit 16 to reduce the volume of the gas being fed to the tank, may help liquify a portion of the gas, and/or can provide other advantages that can outweigh the warming of the stored liquid that may occur from feeding the gas through the liquid of the storage tank 3. To facilitate the bubbling of the gas to be fed to the storage tank 3 via the storage tank recovery conduit 16, an outlet of the storage tank recovery conduit 16 can be positioned to be a pre-selected distance below an anticipated liquid level position of the storage tank 3 or positioned at or adjacent a bottom of the storage tank 3.

In some implementations, at least one cooling device 21 can be connected to the cooled heating medium output conduit 14. The at least one cooling device 21 can be a chiller (e.g. an absorption chiller) or a heat exchanger that uses a cooling medium from another plant process for cooling of the gas used as a heating medium in the vaporizer 7 that is output from the vaporizer as the cooled heating medium via the cooled heating medium output conduit 14.

In some configurations, the at least one cooling device 21 can be configured to utilize a refrigerant that can be used to cool the cryogenic gas output from the vaporizer as the cooled heating medium and also function as a heating medium in the vaporizer 7 for providing additional heat to the cryogenic liquid being warmed via the vaporizer via a refrigerant heating medium feed conduit 22CM connected between the cooling device 21 and the vaporizer 7. Such a configuration for the cooling device 21 may best be appreciated from the exemplary embodiments of the cooling device 21 illustrated in Figure 9 and 10, which illustrate different exemplary options for use of a refrigerant heating medium feed conduit 22CM for different configurations of the cryogenic liquid vaporizer 7 that can be used in the exemplary embodiment of the apparatus 1 for warming a cryogenic liquid and re-cooling gas for recapture and recovery of gas formed from the storage or use of the cryogenic liquid shown in Figures 1-4.

As may be appreciated from Figures 9 and 10, the cooling device 21 can include a cooling heat exchanger 21cd for further cooling the cooled gas output from the vaporizer 7 via the cooled heating medium output conduit 14. The cooling heat exchanger 21cd can receive the cooled gas from the vaporizer via a cooling device feed conduit 14a positioned between the vaporizer 7 and the cooling heat exchanger 21cd of the cooling device 21. The cooling heat exchanger 21cd can utilize a refrigerant for further cooling the gas to a pre-selected cryogenic stream recovery temperature. This temperature can be selected to help liquify at least a portion of the gas via the expansion mechanism 12 or help provide full liquefaction of the gas after it is passed through the expansion mechanism 12, which can be positioned between the storage tank 3 and the cooling heat exchanger 21cd. The further cooled gas output from the cooling heat exchanger 21cd can be fed toward the tank 3 via an expansion mechanism feed conduit 14b positioned between the expansion mechanism 12 and the cooling heat exchanger 21cd. In some embodiments, the pre-selected cryogenic stream recovery temperature can be selected so that the further cooled gas passed through the expansion mechanism feed conduit 14b also includes some liquid from condensation of the gas that may occur from the temperature reduction of the gas via the cooling heat exchanger 21cd.

The refrigerant used in the cooling heat exchanger 21cd of the cooling device 21 can be fed to the cooling heat exchanger 21cd via a refrigerant feed conduit 21Rin. The warmed refrigerant used as the cooling medium in the cooling heat exchanger 21cd can be output from the cooling heat exchanger 21cd via a refrigerant output conduit 21Rout positioned between the cooling heat exchanger 21cd and the vaporizer 7. The cooling device 21 can include a refrigerant pressure increasing device 21PC that can be positioned to receive the warmed refrigerant via the refrigerant output conduit 21Rout to increase the pressure of the refrigerant to a pre-selected vaporizer feed pressure. The refrigerant's pre-selected vaporizer feed pressure can be a suitable pressure that can be selected to account for the feed pressure for feeding the refrigerant to the vaporizer 7 for use as a heating medium therein, the type of refrigerant that is selected and its material properties, and the flow rate of refrigerant to be utilized. The refrigerant pressure increasing device 21PC can be, for example, a pump or a compressor. The warmed refrigerant can be output from the refrigerant pressure increasing device 21PC at the pre-selected vaporizer feed pressure for being fed as a heating medium for the vaporizer 7 via the heating medium feed conduit 22CM. The vaporizer 7 can output the refrigerant as a cooled refrigerant that is at a pre-selected refrigerant feed temperature for feeding the refrigerant to the cooling device 21 for being fed to the cooling heat exchanger 21cd. The cooled refrigerant can be output from the vaporizer 7 and fed to a refrigerant pressure let down device 21pld of the cooling device 21 to reduce the pressure of the refrigerant for feeding to the cooling heat exchanger 21cd via a pressure let down device feed conduit 24CM positioned between the vaporizer 7 and the refrigerant pressure let down device 21pld. The refrigerant pressure let down device 21pld can reduce the pressure of the refrigerant, which can also further cool the refrigerant to a pre-selected cooling heat exchanger refrigerant feed temperature for feeding the refrigerant to the cooling heat exchange via refrigerant feed conduit 21Rin for use as a cooling medium therein for further cooling of the gas to be further re-cooled for returning that fluid to the storage tank 3 via storage tank recovery conduit 16 and/or the pump 5 via recovery pump feed conduit 16p.

In some embodiments, the refrigerant utilized as a cooling medium for the cooling heat exchanger 21cd of the cooling device 21 can be a fluid comprising hydrogen or helium. For instance, the refrigerant can include a fluid that is at least 99 mole percent (mol%) hydrogen (e.g. between 99 mol% hydrogen to 100 mol% hydrogen) or at least 99 mol% helium (e.g. between 99 mol% helium to 100 mol% helium). The pre-selected cooling heat exchanger refrigerant feed temperature can be a temperature in the range of -300°C to -400°C or other suitable range. An example of a pre-selected cooling heat exchanger refrigerant feed pressure at which the refrigerant is output from the refrigerant pressure let down device 21pld for being fed to the cooling heat exchange via refrigerant feed conduit 21Rin can be a pressure in the range of 0.1 MPa and 10 MPa.

As may be appreciated from Figure 9, in some implementations the vaporizer 7 can be configured to utilize multiple heat exchangers in series, which can include a first heat exchanger HX1 and a second heat exchanger HX2. The first heat exchanger HX1 can receive the gas from at least one vessel 30 of the gas storage device 10 as the gas feed 10f for use as a heating medium therein for warming the cryogenic liquid output from the pump 5 that is fed to the vaporizer 7. The cryogenic liquid may only be partially vaporized via the first heat exchanger HX1, may be vaporized but at an insufficiently high temperature, or may be heated without being sufficiently heated for vaporization via the first heat exchanger HX1. A second heat exchanger HX2 can receive the heated fluid or at least partially vaporized fluid output from the first heat exchanger HX1 via a second heat exchanger feed conduit 5i positioned between the first heat exchanger HX1 and the second heat exchanger HX2. The second heat exchanger HX2 of the vaporizer 7 can receive warmed refrigerant output from the cooling device 21 via the heating medium feed conduit 22CM so the warmed refrigerant can be cooled back to a pre-selected refrigerant feed temperature while also providing heat for warming of the cryogenic liquid stream fed to the vaporizer for outputting the warmed cryogenic liquid output from the pump 5 as a gas via vaporizer output conduit 8. The cooled refrigerant that was used as the heating medium in the second heat exchanger HX2 can be output from the second heat exchanger HX2 for being fed to a refrigerant pressure let down device 21pld of the cooling device 21 via the pressure let down device feed conduit 24CM positioned between the second heat exchanger HX2 of the vaporizer 7 and the refrigerant pressure let down device 21pld.

As may be appreciated from Figure 10, in some other implementations the vaporizer 7 can be configured to include a first heat exchanger HX1 that can receive the gas from at least one vessel 30 of the gas storage device 10 as the gas feed 10f for use as a heating medium therein for warming the cryogenic liquid output from the pump 5 that is fed to the vaporizer 7 and also receive the warmed refrigerant from the cooling device 21 as a heating medium for use therein for warming the cryogenic liquid. In such an arrangement, the first heat exchanger HX1 of the vaporizer 7 can receive warmed refrigerant output from the cooling device 21 via the heating medium feed conduit 22CM so the warmed refrigerant can be cooled back to the pre-selected refrigerant feed temperature while also providing heat for warming of the cryogenic liquid stream fed to the vaporizer 7 for outputting the vaporized cryogenic liquid output from the pump 5 as a gas via vaporizer output conduit 8. The cooled refrigerant that was used as the heating medium in the first heat exchanger HX1 can be output from the first heat exchanger HX1 for being fed to a refrigerant pressure let down device 21pld of the cooling device 21 via the pressure let down device feed conduit 24CM positioned between the first heat exchanger HX1 of the vaporizer 7 and the refrigerant pressure let down device 21pld.

Some embodiments of the cooling device 21 can utilize a refrigerant buffer tank 25 (RT) that can store additional refrigerant therein so that such refrigerant can be added to the circuit of refrigerant flow to make up for any lost refrigerant that may occur during use (e.g. imperfect seals, leaks, etc.). A refrigerant makeup conduit 26 can be connected between the refrigerant buffer tank 25 and a conduit of the refrigerant circuit (e.g. the refrigerant heating medium feed conduit 22CM, the refrigerant output conduit 21Rout, the pressure let down device feed conduit 24CM, etc.) for providing refrigerant makeup as may be needed during operations. A valve of the refrigerant makeup conduit 26 can be adjusted between open and closed positions to facilitate such a flow of refrigerant makeup fluid.

In some embodiments, the heating that may be provided by the gas output from the gas storage device 10 as well as warmed refrigerant that may be provided by a cooling device 21 may not be sufficient for vaporization of the cryogenic liquid. In such a situation, the vaporizer can include an additional heat exchanger that can utilize another flow of heating medium AA, which can be ambient air or other type of heating medium for providing additional source of heat for vaporization of the cryogenic liquid. For example, the vaporizer 7 can include a third heat exchanger HX3 shown in broken line in Figures 9 and 10 that may utilize another flow of another heating medium AA. As another example, the vaporizer 7 can include a second heat exchanger in situations where a first heat exchanger of the vaporizer 7 may utilize the gas output from the gas storage device 10 as the heating medium and a second heat exchanger downstream of that heat exchanger can be utilized for use of the other flow of heating medium AA.

In some configurations, the captured cryogenic gas retained via the gas storage device 10 can be entirely or at least partially provided as cryogenic gas downstream of the vaporizer 7. For example, the cooled cryogenic gas fed to the vaporizer as a heating medium that is output from the vaporizer via the cooled heating medium output conduit 14 can be fed for merging with the cryogenic gas output from the vaporizer 7 via the vaporizer output conduit 8. For instance, a cryogenic gas recovery supply conduit 16a can be connected between the vaporizer output conduit 8 and the cooled heating medium output conduit 14 for providing the gas from the gas storage device 10 to the vaporizer output conduit gas after being used as a heating medium in the vaporizer 7. In such an implementation, all the gas can be recovered via being passed downstream of the vaporizer 7 for mixing with the vaporized cryogenic liquid output from the vaporizer 7 as cryogenic gas via the cryogenic gas recovery supply conduit 16a or a portion of that gas can be passed downstream of the vaporizer 7 via the cryogenic gas recovery supply conduit 16a and another portion of this fluid can be fed back to the storage tank 3.

In some configurations, a phase separator PS can be positioned between the storage tank 3 and the cooled heating medium output conduit 14 for separation of liquid and gas that may be formed from the gas output to the cooled heating medium output conduit 14 or subsequently further cooled via the cooling device 21 and/or expansion mechanism 12. For example, the phase separator PS can be positioned between the expansion mechanism 12 and the storage tank 3. Liquid of this further cooled stream can be output from the phase separator PS for being fed to the tank 3 via the storage tank recovery conduit 16 that can be connected between the phase separator PS and the storage tank 3 or the pump 5 via the recovery pump feed conduit 16p that can be connected between the phase separator PS and the pump 5.

Gas output from the phase separator PS can be fed to the cryogenic gas recovery supply conduit 16a via a phase separator gas output conduit 16b connected between the phase separator PS and the cryogenic gas recovery supply conduit 16a for providing the cryogenic gas output from the phase separator PS for further use downstream of the vaporizer 7 (e.g. for use in fuel dispensing via dispensing system 9 or use in another downstream process that may use the cryogenic gas). As another option, the gas output from the phase separator PS can be fed to the gas storage device 10 via a gas storage device feed conduit 16c connected between the phase separator PS and the gas storage device 10 for providing the cryogenic gas output from the phase separator PS. In some embodiments, the phase separator gas output conduit 16b can be connected to the gas storage device feed conduit 16c for feeding the gas output from the phase separator PS to the gas storage device 10. In some embodiments, such a gas storage device feed conduit 16c can include a compressor or other flow driving mechanism to help facilitate the flow of the gas from the phase separator PS to the gas storage device 10. The gas output from the phase separator PS that is fed to the gas storage device 10 can be stored therein and re-used as a heating medium for the vaporizer 7 and subsequently passed back through other elements for being fed to the pump 5, storage tank 3 and/or again recycled back to the gas storage device 10.

As may best be appreciated from Figures 5-8, the gas storage device 10 (Gas Storage Device) can be configured in various different ways. Exemplary arrangements for the gas storage device 10 are shown in Figures 5-8. Other configurations can also be utilized in other embodiments of the gas storage device 10 as well.

For example, in some implementations, the gas storage device 10 can include a plurality of storage vessels (e.g. examples shown in Figures 5 and 6, or only a single storage vessel 30 (e.g. example embodiments shown in Figures 7 and 8). Some of the storage vessels 30 can be arranged in series while one other storage vessel 30 can be utilized in parallel or as an alternative source of the gas for providing to the vaporizer 7 as a heating medium for subsequently being re-cooled and recaptured or re-used as discussed herein.

For example, as may be appreciated from Figures 5 and 6, the gas storage device 10 can include a first gas storage vessel 30 that is configured as a buffer tank 31 and a second gas storage vessel 30 that is configured as a metal hydride storage vessel 33 that is downstream of the buffer tank to receive gas from the buffer tank for storage therein. The first and second gas storage vessels 30 that are configured as the buffer tank 31 and metal hydride storage vessel 33 can be configured for the receipt and storage of a gas that may have purity concerns so that the metal hydride storage vessel 33 can store the sufficiently purified gas while removing the impurities from that gas.

For instance, the first storage vessel 30 that can be configured as a feed buffer tank 31 can receive a first gas stream 31a that is for feeding to the second storage vessel 30 that is configured as a metal hydride storage vessel 33 for storage of the gas having improved purity via that storage. The buffer tank 31 can be sized to accommodate a large flow of gas fed to the vessel 30 as the first gas stream 31a that can subsequently be provided at a slower flow rate to the second storage vessel 30 to accommodate the rate of storage that can be provided by the metal hydride storage vessel 33 via a second storage vessel feed conduit 10g positioned between the first storage vessel 30 and the second storage vessel 30 configured as the metal hydride storage vessel 33.

For example, cryogenic gas obtained from when cryogenic gas is formed when cryogenic liquid from a trailer 3T is passed through the trailer connection 2T to cool down the elements of the connection as a purge stream can be recovered and fed to the first storage vessel as the first gas stream 31a. This purge stream may have higher impurity contents due to the interaction of the purge stream with the trailer connection 2T elements and may be fed to the metal hydride storage vessel 33 as the storage of the gas via the metal hydride storage vessel 33 can facilitate storage of a purified gas that does not include those impurities due to the metal hydride elements of the storage vessel. If the cryogenic gas from such operations may be high, the buffer tank 31 can provide an intake mechanism to permit the high rate of the cryogenic gas to be accommodated so the purge operations can occur quickly while also permitting the slower intake rate of the metal hydride storage vessel 33 to be accommodated.

In configurations that may only utilize a single storage vessel 30 configured as a metal hydride storage vessel 33 as shown in Figure 8 and/or an arrangement of storage vessels in series in which the second storage vessel 30 can be configured as a metal hydride storage vessel 33 as shown in Figures 5 and 6, the cryogenic gas of the first gas stream 31a can be provided via multiple different conduits of the arrangement of feed conduits for recovering cryogenic gas of the vaporized gas recapture and recovery system 2. For example, the first gas stream 31a can include the cryogenic gas obtained via cryogenic gas that is formed when cryogenic liquid from a trailer 3T is passed through the trailer connection 2T to cool down the elements of the connection as a purge stream that can be fed to the gas storage device via trailer gas feed conduit 20 and the cryogenic gas that is received via trailer blowdown operations that can be received via the trailer gas feed conduit 20. As noted above, this cryogenic gas can be warmed to a non-cryogenic temperature via passing through a conduit for being fed to a storage vessel of the gas storage device 10.

The first gas stream 31a can also (or alternatively) include cryogenic gas from the tank 3 that is provided to the gas storage device 10 via pressure reduction conduit 10a that may be provided via tank pressure reduction operations to maintain the pressure of the storage tank 3 as discussed above and/or tank blowdown operations that may be performed for feeding additional cryogenic liquid to the tank 3 via at least one trailer 3T via trailer connection 2T as discussed above. The first gas stream 31a can also (or alternatively) include cryogenic gas obtained via pump cooldown operations via the pump cooldown output conduit 10b. As noted above, these flows of cryogenic gas that can be fed to the gas storage device 10 can be warmed to a non-cryogenic temperature for being fed to a storage vessel of the gas storage device 10 (e.g. warmed via passing through at least one conduit, etc.).

The gas storage device 10 can also include a third storage vessel 30 as may best be appreciated from Figure 5. The third storage vessel 30 can be configured as a gas storage vessel 35 for receiving a second gas stream 35a for storage from at least one source of cryogenic gas (e.g. pump cooldown operations and/or storage tank venting operations). In some configurations, the gas of the second gas stream 35a can have a higher purity of cryogenic gas as compared to the first gas stream 31a.

For instance, gas from pump cooldown operations via pump cooldown output conduit 10b and/or storage tank 3 pressure reduction and/or blowdown operations via pressure reduction conduit 10a can be fed to the third storage vessel 35 as the second gas stream 35a. The gas received from these operations may be at a higher purity content as compared to other sources of the gas that can be provided to the first storage vessel 30 via the first gas stream 31a (e.g. greater concentration of hydrogen gas as compared to other sources in some embodiments where the storage tank 3 is configured for storage of liquid hydrogen, greater concentration of oxygen gas as compared to other sources in some embodiments where the storage tank 3 is configured for storage of liquid oxygen, etc.).

In such an implementation, the first gas stream 31a can include gas that is formed when cryogenic liquid from a trailer 3T is passed through the trailer connection 2T to cool down the elements of the connection as a purge stream that can be fed to the gas storage device 10 via trailer gas feed conduit 20 and/or the cryogenic gas that is received via trailer blowdown operations that can be received via the trailer gas feed conduit 20.

In some embodiments, it is contemplated that the first cryogenic stream 31a can include cryogenic gas that is formed when cryogenic liquid from a trailer 3T is passed through the trailer connection 2T to cool down the elements of the connection as a purge stream that can be fed to the gas storage device via trailer gas feed conduit 20 and the second gas stream 35a can include cryogenic gas that is received via trailer blowdown operations that can be received via the trailer gas feed conduit 20 as well as gas from pump cooldown operations via pump cooldown output conduit 10b and storage tank 3 pressure reduction and storage tank blowdown operations via pressure reduction conduit 10a can be fed to the third storage vessel 35 as the second gas stream 35a.

In other embodiments of the gas storage device 10, the device can include a single storage vessel 30. For instance, in some embodiments the single storage vessel 30 can be configured as a metal hydride storage vessel 33 for storage of the cryogenic gas received as the first gas stream 31a and subsequent use of that gas. An example of such an arrangement can be seen in Figure 8 in implementations that do not utilize the broken line elements shown in Figure 8. In such embodiments, the release and use of the stored gas can be provided via one or more heating elements that can heat the metal hydride storage vessel 33 to increase the pressure and temperature of the stored gas so the stored gas can be output from the gas storge device 10 as cryogenic gas feed 10f.

In other embodiments, the storage vessel 30 can be a tank 31 that can be configured to store the gas and a pressure increasing mechanism C (e.g. compressor, etc.) can be positioned for driving a flow of the cryogenic gas feed 10f from the gas storage device 10 to the vaporizer 7. An example of such an arrangement is shown in Figure 7.

In some embodiments, the gas storage device 10 can include multiple storage vessels 30 that can operate in parallel or otherwise. For example, Figures 5 and 8 illustrate examples of such an embodiment. As may be appreciated from Figure 8 (including the broken line elements shown in Figure 8), a first storage vessel 30 can be configured as a metal hydride storage vessel 33 for storage of the cryogenic gas provided via the first gas stream 31a and subsequent use of that gas. In such embodiments, the release and use of the stored gas can be provided via one or more heating elements that can heat the metal hydride storage vessel 33 to increase the pressure and temperature of the stored gas so the stored gas can be output from the gas storge device 10 as cryogenic gas feed 10f.

A second storage vessel 30 can be positioned as a second gas storage vessel 35 for receiving a second gas stream 35a therein. The cryogenic gas from the second gas stream 35a can be output from the second gas storage vessel 35 via a pressure increasing mechanism C (e.g. compressor, etc.) positioned to drive a flow of the cryogenic gas feed 10f to be output from the second gas storage vessel 35 via a second gas storage vessel output conduit 10h that is connected to a pressure increasing mechanism C positioned between the vaporizer 7 and the gas storage device 10 or via a second gas storage vessel output conduit 10i that is positioned in communication with a pressure increasing mechanism C of the gas storage device 10 drive a flow of the cryogenic gas feed 10f to be output from the second gas storage vessel 35 of the gas storage device 10.

In some embodiments, the gas storage device 10 can be configured to receive the first gas stream 31a and the second gas stream 35a, different storage vessels 30 can be configured to store the gas at different storage pressures. For example, the first vessel 30 that receives the first gas stream 31a can receive the gas and store the gas at a pressure that is higher or lower than the pressure at which the other vessel 35 receives the second gas stream 35a and/or stores that gas.

The storage capacity of the one or more vessels 30 of the gas storage device 10 can be sized and configured to receive cryogenic gas for storage and use of that gas. Sizing can be adapted to meet a pre-selected set of criteria.

In some embodiments, it is contemplated that the gas stored in gas storage device 10 for use as a vaporizer heating medium may not be sufficient for full vaporization of the cryogenic liquid output from the pump 5. In such embodiments, another heating medium can also be fed to the vaporizer 7 (e.g. ambient air and/or warmed refrigerant from the cooling device 21 when utilized, etc.).

It should be appreciated that the gas storage device 10 can receive gas formed from evaporation of cryogenic liquid that may occur or can store gas formed from the cryogenic liquid that is no longer a cryogenic gas due to it warming to a sufficient temperature that the gas is no longer cryogenic in temperature. The gas storage device 10 can store the gas it receives so that the gas is warmed during storage so it can be more effectively used as a heating medium in the vaporizer 7. The storage device 10 can be configured and utilized to output the gas that is stored therein as a non-cryogenic gas that can be fed to the vaporizer 7, for example. This gas stored via the gas storage device 10 may then undergo cooling via use as a heating medium in the vaporizer 7 as well as other cooling (e.g. cooling via use of expansion mechanism 12 and/or cooling device 21 as discussed above) to form a cryogenic gas or to at least partially liquify the gas to form cryogenic liquid and/or a mixture of cryogenic gas and cryogenic liquid for recapture of the stored gas as a cryogenic fluid.

Embodiments of our process for warming a cryogenic liquid and re-cooling gas for recapture and recovery of that cryogenic gas can be utilized in embodiments of our apparatus 1 and/or embodiments of our vaporized gas recapture and recovery system 2. Examples of such process can be appreciated from the above as well as the exemplary embodiment illustrated in Figure 11. For example, in the exemplary embodiment of our process shown in Figure 11, the process can include a first step S1 that can include feeding gas from a cryogenic liquid storage tank 3, gas from a cryogenic liquid trailer 3T, purge gas from a trailer connection 2T, and/or pump cool down fluid to a gas storage device 10.

Gas formed from the cryogenic liquid from one or other processes of a system or the apparatus can also be fed to the gas storage device 10 for storage and use instead of being vented as well. For example, another waste stream that includes the process gas (e.g. gas of the cryogenic liquid stored in storage tank 3) can also be utilized for feeding to the storage device 10.

The gas can be fed to the gas storage device 10 as a first gas stream 31a or as a first gas stream 31a and a second gas stream 35a in some embodiments. For instance, the feeding of the cryogenic gas to the gas storage device 10 can be provided via the arrangement of feed conduits for recovering cryogenic gas from different units of the apparatus 1 included in the vaporized gas recapture and recovery system 2, as discussed above.

In a second step S2, the gas stored in the gas storage device 10 can be output from the gas storage device 10 to the vaporizer 7 for warming cryogenic liquid output from the storage tank 3 via pump 5 that is fed to the vaporizer 7. The gas stored in the storage device 10 can be stored for a sufficiently long residence time to facilitate warming of that gas so that the gas is no longer a cryogenic gas in situations where the gas fed to the gas storage device 10 was at a cryogenic temperature at the time it was fed to the gas storage device 10. In other situations, the gas stored in the gas storage device 10 can be warmed gas that is no longer at a cryogenic temperature as discussed above.

The gas output from the gas storage device 10 can be a heating medium used in the vaporizer 7 to at least partially vaporize the cryogenic liquid, entirely vaporize the cryogenic liquid, or contribute to vaporization of the cryogenic liquid (e.g. warm the cryogenic liquid). The use of the cryogenic gas output from the gas storage device 10 as a heating medium in the vaporizer 7 can result in the gas being cooled as it transfers heat to the cryogenic liquid in the second step S2. Examples of providing the gas to the vaporizer 7 as a heating medium can be appreciated from the above. In situations where the use of the stored gas is unable to fully vaporizer cryogenic liquid fed to the vaporizer 7 via the pump, one or more other heating mediums may be fed to one or more heat exchangers of the vaporizer 7 for adding additional heat for vaporization of the cryogenic liquid as discussed above.

In a third step S3, the cooled gas used as the heating medium in the cryogenic liquid vaporizer 7 can be fed to the cryogenic liquid storage tank 3, to the pump 5, and/or to a conduit or other unit downstream of the vaporizer 7 for recovery of that fluid. In some embodiments, at least a portion of the cooled gas fed toward the cryogenic liquid storage tank 3 can undergo further cooling via at least one cooling device 21, pressure reduction via a pressure reduction device (e.g. Joule Thomson valve, expander, at least one expansion mechanism 12, etc.), and/or phase separation via a phase separator PS for feeding to the storage tank 3. Examples of feeding the cooled gas output from the vaporizer 7 to the storage tank 3, pump 5, and/or downstream of the vaporizer 7 to another process unit or conduit can be appreciated from the above. For instance, some embodiments of the process can utilize the exemplary embodiments of the arrangement of output conduits of the vaporized gas recapture and recovery system 2 discussed above, for example.

In situations where the fluid is fed to the storage tank 3 and the fluid includes a gas or is a gas, the gas can be fed to the storage tank so that the gas is fed below a liquid level line of the storage tank so the gas is passed through the cryogenic liquid of the tank (e.g. bubbled through the liquid of the tank 3). This bubbling of the recovered gas can help cool that gas to reduce a volume of the gas being fed to the tank, may help liquify a portion of the gas, and/or can provide other advantages that can outweigh the warming of the stored liquid that may occur from feeding the gas through the liquid of the storage tank 3.

We have found that the gas storage device 10 can be utilized in embodiments to capture different streams that have different quantities and time scales for re-cooling the fluid of those streams. Such streams conventionally would have been considered waste streams and/or been unrecognized as waste during venting of such fluid. Embodiments can prevent such waste (e.g. preventing venting of fluid etc.) and provide a more flexible operation that also permits a reduction in waste.

It should be appreciated that additional modifications or other modifications to the embodiments explicitly shown and discussed herein can be made to meet a particular set of design objectives or a particular set of design criteria. For instance, the arrangement of valves, piping, and other conduit elements (e.g., conduit connection mechanisms, tubing, seals, valves, etc.) for interconnecting different units of the apparatus for fluid communication of the flows of fluid between different elements (e.g., pumps, heat exchangers, compressors, storage vessels, etc.) can be arranged to meet a particular plant layout design that accounts for available area of the plant, sized equipment of the plant, and other design considerations. As another example, the flow rate, pressure, and temperature of the fluid passed through the various apparatus or system elements can vary to account for different design configurations and other design criteria.

Embodiments of our process, apparatus, and system can each be configured to include process control elements positioned and configured to monitor and control operations (e.g., temperature and pressure sensors, flow sensors, an automated process control system having at least one work station that includes a processor, non-transitory memory and at least one transceiver for communications with the sensor elements, valves, and controllers for providing a user interface for an automated process control system that may be run at the work station and/or another computer device of the plant, etc.). It should be appreciated that embodiments can utilize a distributed control system (DCS) for implementation of one or more processes and/or controlling operations of an apparatus as well.

As another example, it is contemplated that a particular feature described, either individually or as part of an embodiment, can be combined with other individually described features, or parts of other embodiments. The elements and acts of the various embodiments described herein can therefore be combined to provide further embodiments. Thus, while certain exemplary embodiments of our process, apparatus, system, and methods of making and using the same have been shown and described above, it is to be distinctly understood that the invention is not limited thereto but may be otherwise variously embodied and practiced within the scope of the following claims.

## Claims

1. An apparatus for warming a cryogenic liquid to vaporize the cryogenic liquid and re-cool gas for recapture and recovery of that gas, the apparatus comprising:
a vaporized gas recapture and recovery system (2) having a gas storage device (10) positionable between a storage tank (3) positioned and configured to store the cryogenic liquid and a vaporizer (7) positioned to heat the cryogenic liquid outputtable from the storage tank (3) to vaporize the cryogenic liquid; and
the gas storage device (10) positioned to receive gas formed from the cryogenic liquid for storage and feed the stored gas to the vaporizer (7) as a heating medium for warming of the cryogenic liquid,
an arrangement of output conduits of the vaporized gas recapture and recovery system (2), the output conduits comprising a vaporizer heating medium feed conduit connected between the vaporizer (7) and the gas storage device (10) for feeding the gas (10f) to the vaporizer (7) as the heating medium, which is subsequently routed to the storage tank (3) and/or a conduit (8) downstream of the vaporizer (7),
**characterized in that**
the apparatus (1) comprises an arrangement of feed conduits (10a, 10b, 16c, 20) of the vaporized gas recapture and recovery system (2) positioned to feed the gas formed from the cryogenic liquid from different units of the apparatus (1) to the gas storage device (10).

2. The apparatus of claim 1, wherein the arrangement of feed conduits (10a, 10b, 16c, 20) of the vaporized gas recapture and recovery system comprises one or more of:
a pressure reduction conduit (10a) positioned between the gas storage device (10) and the storage tank (3); and/or
a pump cooldown output conduit (10b) positioned between a pump (5) and the gas storage device (10), the pump (5) being positioned between the vaporizer (7) and the storage tank (3) to feed the cryogenic liquid to the vaporizer (7); and/or
at least one trailer gas feed conduit (20) positionable between a trailer (3T) and the gas storage device (3), the trailer being connectable to the storage tank via a trailer connection (2T) for feeding cryogenic liquid from the trailer to the storage tank.

3. The apparatus of claim 2, wherein the at least one trailer gas feed conduit (20) is positioned and configured so the cryogenic gas formed when cryogenic liquid from the trailer (3T) is passed through the trailer connection (2T) to cool down elements of the trailer connection as a purge stream is feedable to the gas storage device (10); and/or
is positioned and configured so that cryogenic gas within the trailer (3T) is passable through the trailer gas feed conduit (20) to at least one storage vessel (30) of the gas storage device (10) during a trailer blowdown operation.

4. The apparatus of any one of the claims 1 to 3, wherein the arrangement of output conduits of the vaporized gas recapture and recovery system comprises:
a cooled heating medium output conduit (14) connected to the vaporizer (7) to output the gas usable as the heating medium in the vaporizer, and
at least one of:
a cryogenic gas recovery supply conduit (16a) connected between the cooled heating medium output conduit (14) and a conduit (8) or process unit (9) downstream of the vaporizer (7); and/or
a recovery pump feed conduit (16p) connected between the cooled heating medium output conduit (14) and the pump (5); and/or
a storage tank recovery conduit (16) connected between the cooled heating medium output conduit (14) and the storage tank (3).

5. The apparatus of claim 4, comprising:
at least one cooling device (21) connectable to the cooled heating medium output conduit (14) to further cool the gas output from the vaporizer (7) via the cooled heating medium output conduit (14), the at least one cooling device (21) positioned between the storage tank (3) and the vaporizer (7).

6. The apparatus of claim 5, wherein the at least one cooling device (21) comprises:
a cooling heat exchanger (21cd) connected to the cooled heating medium output conduit (14) and a refrigerant feed conduit (21Rin) to receive refrigerant, for example comprised of hydrogen or helium, for cooling the gas output from the vaporizer (7) received via the cooled heating medium output conduit (14);
a refrigerant pressure increasing device (21PC) positioned to received warmed refrigerant output from the cooling heat exchanger (21cd) to increase the pressure of the warmed refrigerant for feeding to the vaporizer (7) as a heating medium; and
a refrigerant pressure let down device (21pld) positioned to receive the refrigerant from the vaporizer (7) after the warm refrigerant fed to the vaporizer as the heating medium is cooled via the vaporizer, the pressure let down device (21pld) connected to the refrigerant feed conduit (21 Rin), the pressure let down device (21pld) configured to reduce a pressure of the refrigerant for feeding the refrigerant to the cooling heat exchanger (21cd) at a pre-selected refrigerant feed pressure.

7. The apparatus of claim 6, wherein the vaporizer (7) includes a first heat exchanger (HX1) and a second heat exchanger (HX2), the first heat exchanger (HX1) connected to the vaporizer heating medium feed conduit, the second heat exchanger (HX2) connected between the refrigerant pressure let down device (21pld) and the refrigerant pressure increasing device (21PC), the second heat exchanger (HX2) positioned to receive the warmed refrigerant and output the refrigerant to the refrigerant pressure let down device (21pld) after the warmed refrigerant is used as a heating medium in the second heat exchanger (HX).

8. The apparatus of any one of the preceding claims, comprising:
at least one expansion mechanism (12) positioned between the vaporizer (7) and the storage tank (3) and/or the vaporizer (7) and the pump (5).

9. A process for warming a cryogenic liquid and re-cooling gas, the process comprising:
feeding gas formed from cryogenic liquid stored in a storage tank (3), gas formed from cryogenic liquid within a cryogenic liquid trailer (3T), purge gas from a trailer connection (2T) for connecting the trailer to the cryogenic liquid storage tank, and/or gas of pump cooldown fluid to a gas storage device (10);
outputting the gas from the gas storage device (10) to a cryogenic liquid vaporizer (7) as a heating medium for warming cryogenic liquid output from the cryogenic liquid storage tank (3) and cooling the heating medium; and
feeding the gas used as the heating medium in the cryogenic liquid vaporizer (7) toward the cryogenic liquid storage tank (3), and/or a pump (5) positioned to feed the cryogenic liquid stored in the storage tank (3) to the vaporizer (7) for being vaporized, and/or a conduit (8) or other unit (9) downstream of the cryogenic liquid vaporizer (7), **characterized in that**
the feeding of the gas used as the heating medium in the cryogenic liquid vaporizer (7) toward the cryogenic liquid storage tank (3) and/or the pump (5) is performed and the feeding of the gas used as the heating medium in the cryogenic liquid vaporizer (7) toward the cryogenic liquid storage tank (3) comprises:
feeding at least a portion of the gas used as the heating medium in the cryogenic liquid vaporizer to (i) at least one cooling device (21) and/or (ii) at least one pressure reduction device (12) for feeding fluid to the storage tank (3) and/or the pump (5).

10. The process of claim 9, wherein the fluid fed to the storage tank (3) is at least partially liquified via the at least one cooling device (21) and/or the at least one pressure reduction device (12).

11. The process of any one of the claims 9 to 10, wherein the feeding of the gas used as the heating medium in the cryogenic liquid vaporizer (7) toward the cryogenic liquid storage tank (3), and/or the pump (5), and/or the conduit (8) or other unit (9) downstream of the cryogenic liquid vaporizer (7) comprises:
feeding at least a portion of the gas used as the heating medium in the cryogenic liquid vaporizer (7) to the conduit (8) or other unit (9) downstream of the cryogenic liquid vaporizer (7).

12. The process of any one of the claims 9 to 11, wherein the feeding of the gas used as the heating medium in the cryogenic liquid vaporizer (7) toward the cryogenic liquid storage tank (3), and/or the pump (5), and/or the conduit (8) or other unit (9) downstream of the cryogenic liquid vaporizer (7) comprises:
feeding at least a portion of the gas used as the heating medium in the cryogenic liquid vaporizer to (i) at least one cooling device (21) and/or (ii) at least one pressure reduction device (12) for feeding fluid to the storage tank (3) and/or the pump (5), the at least one pressure reduction device (12) being positioned between the at least one cooling device (21) and the cryogenic liquid storage tank (3) and/or the pump (5).

13. The process of any one of the claims 9 to 12, wherein the feeding of the gas used as the heating medium in the cryogenic liquid vaporizer (7) toward the cryogenic liquid storage tank (3), and/or the pump (5), and/or the conduit (8) or other unit (9) downstream of the cryogenic liquid vaporizer (7) comprises:
feeding at least a portion of the gas used as the heating medium in the cryogenic liquid vaporizer (7) to at least one cooling device (21), and the process also comprises:
feeding a refrigerant to a cooling heat exchanger (21cd) of the at least one cooling device (21) to cool the gas used as the heating medium; and
outputting the refrigerant from the cooling heat exchanger (21cd) for feeding to the vaporizer (7) to cool the refrigerant output from the cooling heat exchanger.

14. The process of any one of the claims 9 to 13, wherein the gas storage device (10) comprises a metal hydride storage vessel (33) configured to store the gas and increase pressure of the gas during the outputting of the gas from the gas storage device (10) to the cryogenic liquid vaporizer (7) as the heating medium.

## Patentansprüche

1. Vorrichtung (1) zur Erwärmung einer kryogenen Flüssigkeit, um die kryogene Flüssigkeit zu verdampfen und Gas zu dessen Wiedereinnahme und Rückgewinnung wieder abzukühlen, wobei die Vorrichtung Folgendes umfasst:
ein System (2) zur Wiedereinnahme und Rückgewinnung von verdampftem Gas mit einer Gasvorratsvorrichtung (10), die zwischen einem Vorratstank (3), der zur Speicherung der kryogenen Flüssigkeit angeordnet und eingerichtet ist, und einem Verdampfer (7), der zur Erhitzung und Verdampfung der aus dem Vorratstank (3) austragbaren kryogenen Flüssigkeit angeordnet ist, angeordnet werden kann,
wobei die Gasvorratsvorrichtung (10) so angeordnet ist, dass sie aus der kryogenen Flüssigkeit entstehendes Gas aufnimmt, um dieses zu speichern, und das gespeicherte Gas dem Verdampfer (7) als Heizmedium zur Erwärmung der kryogenen Flüssigkeit zuführt, und
eine Anordnung von Austragsleitungen des Systems (2) zur Wiedereinnahme und Rückgewinnung von verdampftem Gas, wobei die Austragsleitungen eine Verdampfer-Heizmediumzuleitung umfassen, die zwischen dem Verdampfer (7) und der Gasvorratsvorrichtung (10) angeschlossen ist, um das Gas (10f) dem Verdampfer (7) als Heizmedium zuzuführen, welches anschließend zu dem Vorratstank (3) und/oder einer dem Verdampfer (7) nachgeschalteten Leitung (8) geleitet wird,
**dadurch gekennzeichnet, dass**
die Vorrichtung (1) eine Anordnung von Zuleitungen (10a, 10b, 16c, 20) des Systems (2) zur Wiedereinnahme und Rückgewinnung von verdampftem Gas umfasst, die so angeordnet sind, dass sie das aus der kryogenen Flüssigkeit entstehende Gas aus verschiedenen Einheiten der Vorrichtung (1) der Gasvorratsvorrichtung (10) zuführen.

2. Vorrichtung (1) nach Anspruch 1, wobei die Anordnung von Zuleitungen (10a, 10b, 16c, 20) des Systems (2) zur Wiedereinnahme und Rückgewinnung von verdampftem Gas Folgendes umfasst:
eine Druckminderungsleitung (10a), die zwischen der Gasvorratsvorrichtung (10) und dem Vorratstank (3) angeordnet ist, und/oder
eine Pumpenabkühlaustragsleitung (10b), die zwischen einer Pumpe (5) und der Gasvorratsvorrichtung (10) angeordnet ist, wobei die Pumpe (5) zwischen dem Verdampfer (7) und dem Vorratstank (3) angeordnet ist, um die kryogene Flüssigkeit dem Verdampfer (7) zuzuführen, und/oder
mindestens eine Anhänger-Gaszuleitung (20), die zwischen einem Anhänger (3T) und der Gasvorratsvorrichtung (10) angeordnet werden kann, wobei der Anhänger (3T) über einen Anhängeranschluss (2T) an den Vorratstank (3) angeschlossen werden kann, um kryogene Flüssigkeit aus dem Anhänger (3T) dem Vorratstank (3) zuzuführen.

3. Vorrichtung (1) nach Anspruch 2, wobei die mindestens eine Anhänger-Gaszuleitung (20) so angeordnet und eingerichtet ist, dass das kryogene Gas, das dann entsteht, wenn kryogene Flüssigkeit aus dem Anhänger (3T) durch den Anhängeranschluss (2T) geleitet wird, um als Spülstrom Elemente des Anhängeranschlusses (2T) abzukühlen, der Gasvorratsvorrichtung (10) zugeführt werden kann, und/oder
so angeordnet und eingerichtet ist, dass kryogenes Gas im Inneren des Anhängers (3T) bei einem Anhänger-Abblasevorgang durch die Anhänger-Gaszuleitung (20) zu mindestens einem Vorratsgefäß (30) der Gasvorratsvorrichtung (10) geleitet werden kann.

4. Vorrichtung (1) nach einem der Ansprüche 1 bis 3, wobei die Anordnung von Austragsleitungen des Systems (2) zur Wiedereinnahme und Rückgewinnung von verdampftem Gas Folgendes umfasst:
eine Austragsleitung (14) für gekühltes Heizmedium, die an den Verdampfer (7) angeschlossen ist, um das im Verdampfer (7) als Heizmedium verwendbare Gas auszutragen, und
eine Rückgewinnungszuleitung (16a) für kryogenes Gas, die zwischen der Austragsleitung (14) für gekühltes Heizmedium und einer dem Verdampfer (7) nachgeschalteten Leitung (8) oder Prozesseinheit (9) angeschlossen ist, und/oder
eine Rückgewinnungspumpenzuleitung (16p), die zwischen der Austragsleitung (14) für gekühltes Heizmedium und der Pumpe (5) angeschlossen ist, und/oder
eine Vorratstank-Rückgewinnungsleitung (16), die zwischen der Austragsleitung (14) für gekühltes Heizmedium und dem Vorratstank (3) angeschlossen ist.

5. Vorrichtung (1) nach Anspruch 4, die Folgendes umfasst:
mindestens eine Kühlvorrichtung (21), die an die Austragsleitung (14) für gekühltes Heizmedium angeschlossen werden kann, um das über die Austragsleitung (14) für gekühltes Heizmedium aus dem Verdampfer (7) ausgetragene Gas weiter zu kühlen, wobei die mindestens eine Kühlvorrichtung (21) zwischen dem Vorratstank (3) und dem Verdampfer (7) angeordnet ist.

6. Vorrichtung (1) nach Anspruch 5, wobei die mindestens eine Kühlvorrichtung (21) Folgendes umfasst:
einen Kühlungswärmetauscher (21cd), der an die Austragsleitung (14) für gekühltes Heizmedium und eine Kältemittelzuleitung (21Rin) angeschlossen ist, um Kältemittel, das beispielsweise aus Wasserstoff oder Helium besteht, aufzunehmen, um das aus dem Verdampfer (7) ausgetragene und über die Austragsleitung (14) für gekühltes Heizmedium aufgenommene Gas zu kühlen,
eine Kältemitteldruckerhöhungsvorrichtung (21PC), die so angeordnet ist, dass sie aus dem Kühlungswärmetauscher (21cd) ausgetragenes, erwärmtes Kältemittel aufnimmt, um den Druck des erwärmten Kältemittels zu erhöhen, um dieses als Heizmedium dem Verdampfer (7) zuzuführen, und
eine Kältemitteldruckabbauvorrichtung (21pld), die so angeordnet, dass sie das Kältemittel aus dem Verdampfer (7) aufnimmt, nachdem das als Heizmedium dem Verdampfer (7) zugeführte warme Kältemittel über den Verdampfer (7) gekühlt wurde, wobei die Kältemitteldruckabbauvorrichtung (21pld) an die Kältemittelzuleitung (21Rin) angeschlossen und so eingerichtet ist, dass sie einen Druck des Kältemittels mindert, um das Kältemittel mit einem vorgegebenen Kältemittelzuführdruck dem Kühlungswärmetauscher (21cd) zuzuführen.

7. Vorrichtung (1) nach Anspruch 6, wobei der Verdampfer (7) einen ersten Wärmetauscher (HX1) und einen zweiten Wärmetauscher (HX2) umfasst, wobei der erste Wärmetauscher (HX1) an die Verdampfer-Heizmediumzuleitung angeschlossen ist, wobei der zweite Wärmetauscher (HX2) zwischen der Kältemitteldruckabbauvorrichtung (21pld) und der Kältemitteldruckerhöhungsvorrichtung (21PC) angeschlossen ist, wobei der zweite Wärmetauscher (HX2) so angeordnet ist, dass er das erwärmte Kältemittel aufnimmt und an die Kältemitteldruckabbauvorrichtung (21pld) abgibt, nachdem das erwärmte Kältemittel im zweiten Wärmetauscher (HX2) als Heizmedium verwendet wurde.

8. Vorrichtung (1) nach einem der vorhergehenden Ansprüche, die mindestens einen Expansionsmechanismus (12) umfasst, der zwischen dem Verdampfer (7) und dem Vorratstank (3) und/oder dem Verdampfer (7) und der Pumpe (5) angeordnet ist.

9. Verfahren zur Erwärmung einer kryogenen Flüssigkeit und zur Wiederabkühlung von Gas, wobei das Verfahren folgende Schritte umfasst:
aus in einem Vorratstank (3) gespeicherter kryogener Flüssigkeit entstehendes Gas, aus in einem Anhänger (3T) für kryogene Flüssigkeit befindlicher kryogener Flüssigkeit entstehendes Gas, Spülgas aus einem Anhängeranschluss (2T) zum Anschluss des Anhängers (3T) an den Vorratstank (3) für kryogene Flüssigkeit und/oder Gas aus Pumpenabkühlfluid werden einer Gasvorratsvorrichtung (10) zugeführt,
das Gas aus der Gasvorratsvorrichtung (10) wird als Heizmedium an einen Verdampfer (7) für kryogene Flüssigkeit abgegeben, um aus dem Vorratstank (3) für kryogene Flüssigkeit ausgetragene kryogene Flüssigkeit zu erwärmen und das Heizmedium zu kühlen, und
das im Verdampfer (7) für kryogene Flüssigkeit als Heizmedium verwendete Gas wird dem Vorratstank (3) für kryogene Flüssigkeit und/oder einer Pumpe (5), die so angeordnet ist, dass sie die im Vorratstank (3) gespeicherte kryogene Flüssigkeit zwecks Verdampfung dem Verdampfer (7) zuführt, und/oder einer dem Verdampfer (7) für kryogene Flüssigkeit nachgeschalteten Leitung (8) oder sonstigen Einheit (9) zugeführt,
**dadurch gekennzeichnet, dass**
der Schritt, bei dem das im Verdampfer (7) für kryogene Flüssigkeit als Heizmedium verwendete Gas dem Vorratstank (3) für kryogene Flüssigkeit und/oder der Pumpe (5) zugeführt wird, erfolgt und in diesem Schritt mindestens ein Teil des im Verdampfer (7) für kryogene Flüssigkeit als Heizmedium verwendeten Gases (i) mindestens einer Kühlvorrichtung (21) und/oder (ii) mindestens einer Druckminderungsvorrichtung (12) zugeführt wird, um Fluid dem Vorratstank (3) und/oder der Pumpe (5) zuzuführen.

10. Verfahren nach Anspruch 9, wobei das dem Vorratstank (3) zugeführte Fluid durch die mindestens eine Kühlvorrichtung (21) und/oder die mindestens eine Druckminderungsvorrichtung (12) zumindest teilweise verflüssigt wird.

11. Verfahren nach einem der Ansprüche 9 bis 10, wobei im Schritt, bei dem das im Verdampfer (7) für kryogene Flüssigkeit als Heizmedium verwendete Gas dem Vorratstank (3) für kryogene Flüssigkeit und/oder der Pumpe (5) und/oder der dem Verdampfer (7) für kryogene Flüssigkeit nachgeschalteten Leitung (8) oder sonstigen Einheit (9) zugeführt wird, mindestens ein Teil des im Verdampfer (7) für kryogene Flüssigkeit als Heizmedium verwendeten Gases der dem Verdampfer (7) für kryogene Flüssigkeit nachgeschalteten Leitung (8) oder sonstigen Einheit (9) zugeführt wird.

12. Verfahren nach einem der Ansprüche 9 bis 11, wobei im Schritt, bei dem das im Verdampfer (7) für kryogene Flüssigkeit als Heizmedium verwendete Gas dem Vorratstank (3) für kryogene Flüssigkeit und/oder der Pumpe (5) und/oder der dem Verdampfer (7) für kryogene Flüssigkeit nachgeschalteten Leitung (8) oder sonstigen Einheit (9) zugeführt wird, mindestens ein Teil des im Verdampfer (7) für kryogene Flüssigkeit als Heizmedium verwendeten Gases (i) mindestens einer Kühlvorrichtung (21) und/oder (ii) mindestens einer Druckminderungsvorrichtung (12) zugeführt wird, um Fluid dem Vorratstank (3) für kryogene Flüssigkeit und/oder der Pumpe (5) zuzuführen, wobei die mindestens eine Druckminderungsvorrichtung (12) zwischen der mindestens einen Kühlvorrichtung (21) und dem Vorratstank (3) für kryogene Flüssigkeit und/oder der Pumpe (5) angeordnet ist.

13. Verfahren nach einem der Ansprüche 9 bis 12, wobei im Schritt, bei dem das im Verdampfer (7) für kryogene Flüssigkeit als Heizmedium verwendete Gas dem Vorratstank (3) für kryogene Flüssigkeit und/oder der Pumpe (5) und/oder der dem Verdampfer (7) für kryogene Flüssigkeit nachgeschalteten Leitung (8) oder sonstigen Einheit (9) zugeführt wird, mindestens ein Teil des im Verdampfer (7) für kryogene Flüssigkeit als Heizmedium verwendeten Gases mindestens einer Kühlvorrichtung (21) zugeführt wird, wobei das Verfahren ferner folgende Schritte umfasst:
ein Kältemittel wird einem Kühlungswärmetauscher (21cd) der mindestens einen Kühlvorrichtung (21) zugeführt, um das als Heizmedium verwendete Gas zu kühlen, und
das Kältemittel wird aus dem Kühlungswärmetauscher (21cd) ausgetragen, um dem Verdampfer (7) zugeführt zu werden, um das aus dem Kühlungswärmetauscher (21cd) ausgetragene Kältemittel zu kühlen.

14. Verfahren nach einem der Ansprüche 9 bis 13, wobei die Gasvorratsvorrichtung (10) ein Metallhydrid-Vorratsgefäß (33) umfasst, das so eingerichtet ist, dass es das Gas speichert und den Druck des Gases erhöht, als das Gas als Heizmedium aus der Gasvorratsvorrichtung (10) ausgetragen und an den Verdampfer (7) für kryogene Flüssigkeit abgegeben wird.

## Revendications

1. Appareil (1) pour réchauffer un liquide cryogénique afin de vaporiser le liquide cryogénique et refroidir du gaz pour le recapter et récupérer, l'appareil comprenant :
un système de recapture et de récupération de gaz vaporisé (2) comportant un dispositif de stockage de gaz (10) positionnable entre un réservoir de stockage (3) positionné et configuré pour stocker le liquide cryogénique et un vaporisateur (7) positionné pour chauffer le liquide cryogénique pouvant sortir du réservoir de stockage (3) afin de vaporiser le liquide cryogénique,
le dispositif de stockage de gaz (10) étant positionné pour recevoir du gaz formé à partir du liquide cryogénique, pour le stocker, et pour fournir le gaz stocké au vaporisateur (7) en tant que fluide caloporteur pour réchauffer le liquide cryogénique ; et
un ensemble de conduits de sortie du système de recapture et de récupération de gaz vaporisé (2), les conduits de sortie comprenant un conduit d'alimentation en fluide caloporteur de vaporisateur raccordé entre le vaporisateur (7) et le dispositif de stockage de gaz (10) pour fournir le gaz (10f) au vaporisateur (7) en tant que fluide caloporteur qui est ensuite dirigé vers le réservoir de stockage (3) et / ou un conduit (8) en aval du vaporisateur (7),
**caractérisé en ce que**
l'appareil (1) comprend un ensemble de conduits d'alimentation (10a, 10b, 16c, 20) du système de recapture et de récupération de gaz vaporisé (2) positionnés pour fournir au dispositif de stockage de gaz (10) le gaz formé à partir du liquide cryogénique provenant de différentes unités de l'appareil (1).

2. Appareil (1) selon la revendication 1, dans lequel l'ensemble des conduits d'alimentation (10a, 10b, 16c, 20) du système de recapture et de récupération de gaz vaporisé (2) comprend :
un conduit de réduction de pression (10a) positionné entre le dispositif de stockage de gaz (10) et le réservoir de stockage (3) ; et / ou
un conduit de sortie de refroidissement de pompe (10b) positionné entre une pompe (5) et le dispositif de stockage de gaz (10), la pompe (5) étant positionnée entre le vaporisateur (7) et le réservoir de stockage (3) pour fournir le liquide cryogénique au vaporisateur (7) ; et / ou
au moins un conduit d'alimentation en gaz de remorque (20) positionnable entre une remorque (3T) et le dispositif de stockage de gaz (10), la remorque (3T) pouvant être raccordé au réservoir de stockage (3) via un raccord de remorque (2T) pour fournir du liquide cryogénique depuis la remorque (3T) vers le réservoir de stockage (3).

3. Appareil (1) selon la revendication 2, dans lequel ledit au moins un conduit d'alimentation en gaz de remorque (20) est positionné et configuré de sorte que le gaz cryogénique, formé lorsque du liquide cryogénique provenant de la remorque (3T) traverse le raccord de remorque (2T) pour refroidir des éléments du raccord de remorque (2T) en tant que flux de purge, puisse être fourni au dispositif de stockage de gaz (10) et / ou
est positionné et configuré de sorte que le gaz cryogénique contenu dans la remorque (3T) puisse traverser le conduit d'alimentation en gaz de remorque (20) vers au moins un récipient de stockage (30) du dispositif de stockage de gaz (10) lors d'une opération de soufflage de remorque.

4. Appareil (1) selon l'une quelconque des revendications 1 à 3, dans lequel l'ensemble des conduits de sortie du système de recapture et de récupération de gaz vaporisé (2) comprend :
un conduit de sortie de fluide caloporteur refroidi (14) raccordé au vaporisateur (7) pour faire sortir le gaz utilisable en tant que fluide caloporteur dans le vaporisateur (7) ; et
un conduit d'alimentation de récupération de gaz cryogénique (16a) raccordé entre le conduit de sortie de fluide caloporteur refroidi (14) et un conduit (8) ou une unité de traitement (9) en aval du vaporisateur (7) ; et / ou
un conduit d'alimentation de pompe de récupération (16p) raccordé entre le conduit de sortie de fluide caloporteur refroidi (14) et la pompe (5) ; et / ou
un conduit de récupération de réservoir de stockage (16) raccordé entre le conduit de sortie de fluide caloporteur refroidi (14) et le réservoir de stockage (3).

5. Appareil (1) selon la revendication 4, comprenant :
au moins un dispositif de refroidissement (21) pouvant être raccordé au conduit de sortie de fluide caloporteur refroidi (14) pour refroidir davantage le gaz sortant du vaporisateur (7) via le conduit de sortie de fluide caloporteur refroidi (14), ledit au moins un dispositif de refroidissement (21) étant positionné entre le réservoir de stockage (3) et le vaporisateur (7).

6. Appareil (1) selon la revendication 5, dans lequel ledit au moins un dispositif de refroidissement (21) comprend :
un échangeur de chaleur refroidissant (21cd) raccordé au conduit de sortie de fluide caloporteur refroidi (14) et à un conduit d'alimentation en réfrigérant (21Rin) pour recevoir du réfrigérant, par exemple composé d'hydrogène ou d'hélium, pour refroidir le gaz sortant du vaporisateur (7) et reçu via le conduit de sortie de fluide caloporteur refroidi (14) ;
un dispositif d'augmentation de pression de réfrigérant (21PC) positionné pour recevoir du réfrigérant réchauffé sortant de l'échangeur de chaleur refroidissant (21cd) afin d'augmenter la pression du réfrigérant réchauffé pour le fournir au vaporisateur (7) en tant que fluide caloporteur ; et
un dispositif de réduction de pression de réfrigérant (21pld) positionné pour recevoir le réfrigérant du vaporisateur (7) après que le réfrigérant réchauffé fourni au vaporisateur (7) en tant que fluide caloporteur soit refroidi via le vaporisateur (7), le dispositif de réduction de pression de réfrigérant (21pld) étant raccordé au conduit d'alimentation en réfrigérant (21Rin) et configuré pour réduire une pression du réfrigérant pour fournir le réfrigérant à l'échangeur de chaleur refroidissant (21cd) à une pression d'alimentation en réfrigérant présélectionnée.

7. Appareil (1) selon la revendication 6, dans lequel le vaporisateur (7) comprend un premier échangeur de chaleur (HX1) et un second échangeur de chaleur (HX2), le premier échangeur de chaleur (HX1) étant raccordé au conduit d'alimentation en fluide caloporteur de vaporisateur, le second échangeur de chaleur (HX2) étant raccordé entre le dispositif de réduction de pression de réfrigérant (21pld) et le dispositif d'augmentation de pression de réfrigérant (21PC), le second échangeur de chaleur (HX2) étant positionné pour recevoir le réfrigérant réchauffé et pour faire sortir le réfrigérant vers le dispositif de réduction de pression de réfrigérant (21pld) après que le réfrigérant réchauffé ait été utilisé en tant que fluide caloporteur dans le second échangeur de chaleur (HX2).

8. Appareil (1) selon l'une quelconque des revendications précédentes, comprenant au moins un mécanisme d'expansion (12) positionné entre le vaporisateur (7) et le réservoir de stockage (3) et / ou entre le vaporisateur (7) et la pompe (5).

9. Procédé pour réchauffer un liquide cryogénique et refroidir du gaz, le procédé comprenant :
la fourniture de gaz formé à partir de liquide cryogénique stocké dans un réservoir de stockage (3), de gaz formé à partir de liquide cryogénique contenu dans une remorque de liquide cryogénique (3T), de gaz de purge provenant d'un raccord de remorque (2T) pour raccorder la remorque (3T) au réservoir de stockage de liquide cryogénique (3) et / ou de gaz provenant de fluide de refroidissement de pompe à un dispositif de stockage de gaz (10) ;
la sortie du gaz depuis le dispositif de stockage de gaz (10) vers un vaporisateur de liquide cryogénique (7) en tant que fluide caloporteur pour réchauffer du liquide cryogénique sortant du réservoir de stockage de liquide cryogénique (3) et pour refroidir le fluide caloporteur ; et
la fourniture du gaz utilisé en tant que fluide caloporteur dans le vaporisateur de liquide cryogénique (7) vers le réservoir de stockage de liquide cryogénique (3) et / ou une pompe (5) positionnée pour fournir le liquide cryogénique stocké dans le réservoir de stockage (3) au vaporisateur (7) pour être vaporisé et / ou à un conduit (8) ou une autre unité (9) en aval du vaporisateur de liquide cryogénique (7),
**caractérisé en ce que**
la fourniture du gaz utilisé en tant que fluide caloporteur dans le vaporisateur de liquide cryogénique (7) vers le réservoir de stockage de liquide cryogénique (3) et / ou la pompe (5) est effectuée, et la fourniture du gaz utilisé en tant que fluide caloporteur dans le vaporisateur de liquide cryogénique (7) vers le réservoir de stockage de liquide cryogénique (3) comprend la fourniture d'au moins une partie du gaz utilisé en tant que fluide caloporteur dans le vaporisateur de liquide cryogénique (7) à (i) au moins un dispositif de refroidissement (21) et / ou (ii) au moins un dispositif de réduction de pression (12) pour fournir du fluide au réservoir de stockage (3) et / ou à la pompe (5).

10. Procédé selon la revendication 9, dans lequel le fluide fourni au réservoir de stockage (3) est au moins partiellement liquéfié via ledit au moins un dispositif de refroidissement (21) et / ou ledit au moins un dispositif de réduction de pression (12).

11. Procédé selon l'une quelconque des revendications 9 à 10, dans lequel la fourniture du gaz utilisé en tant que fluide caloporteur dans le vaporisateur de liquide cryogénique (7) vers le réservoir de stockage de liquide cryogénique (3) et / ou la pompe (5) et / ou le conduit (8) ou l'autre unité (9) en aval du vaporisateur de liquide cryogénique (7) comprend la fourniture d'au moins une partie du gaz utilisé en tant que fluide caloporteur dans le vaporisateur de liquide cryogénique (7) au conduit (8) ou à l'autre unité (9) en aval du vaporisateur de liquide cryogénique (7).

12. Procédé selon l'une quelconque des revendications 9 à 11, dans lequel la fourniture du gaz utilisé en tant que fluide caloporteur dans le vaporisateur de liquide cryogénique (7) vers le réservoir de stockage de liquide cryogénique (3) et / ou la pompe (5) et / ou le conduit (8) ou l'autre unité (9) en aval du vaporisateur de liquide cryogénique (7) comprend la fourniture d'au moins une partie du gaz utilisé en tant que fluide caloporteur dans le vaporisateur de liquide cryogénique (7) à (i) au moins un dispositif de refroidissement (21) et / ou (ii) au moins un dispositif de réduction de pression (12) pour fournir du fluide au réservoir de stockage de liquide cryogénique (3) et / ou à la pompe (5), ledit au moins un dispositif de réduction de pression (12) étant positionné entre ledit au moins un dispositif de refroidissement (21) et le réservoir de stockage de liquide cryogénique (3) et / ou la pompe (5).

13. Procédé selon l'une quelconque des revendications 9 à 12, dans lequel la fourniture du gaz utilisé en tant que fluide caloporteur dans le vaporisateur de liquide cryogénique (7) vers le réservoir de stockage de liquide cryogénique (3) et / ou la pompe (5) et / ou le conduit (8) ou l'autre unité (9) en aval du vaporisateur de liquide cryogénique (7) comprend la fourniture d'au moins une partie du gaz utilisé en tant que fluide caloporteur dans le vaporisateur de liquide cryogénique (7) à au moins un dispositif de refroidissement (21), le procédé comprenant en outre :
la fourniture d'un réfrigérant à un échangeur de chaleur refroidissant (21cd) dudit au moins un dispositif de refroidissement (21) afin de refroidir le gaz utilisé en tant que fluide caloporteur ; et
la sortie du réfrigérant depuis l'échangeur de chaleur refroidissant (21cd) pour le fournir au vaporisateur (7) afin de refroidir le réfrigérant sortant de l'échangeur de chaleur de refroidissant (21cd).

14. Procédé selon l'une quelconque des revendications 9 à 13, dans lequel le dispositif de stockage de gaz (10) comprend un récipient de stockage d'hydrure métallique (33) configuré pour stocker le gaz et augmenter la pression du gaz lors de la sortie du gaz depuis le dispositif de stockage de gaz (10) vers le vaporisateur de liquide cryogénique (7) en tant que fluide caloporteur.
